# EUROPEAN PATENT APPLICATION

(11) **EP 4 707 249 A1**
(43) Date of publication of application: **11.03.2026**
(21) Application number: 24836164.4
(22) Date of filing: 02.05.2024
(51) Int. Cl.: C02F 1/469, C02F 1/42, B01D 61/46

(54) **WATER TREATMENT APPARATUS**

(30) Priority: 03.07.2023 KR 20230086116; 12.09.2023 KR 20230121111; 04.10.2023 KR 20230132060
(71) Applicant: Samsung Electronics Co., Ltd., Suwon-si, Gyeonggi-do 16677 (KR)
(72) Inventor: CHO, Youngkyu, Suwon-si Gyeonggi-do 16677 (KR); KIM, Yumee, Suwon-si Gyeonggi-do 16677 (KR); KIM, Hyoungkyun, Suwon-si Gyeonggi-do 16677 (KR); PARK, Heejin, Suwon-si Gyeonggi-do 16677 (KR); OH, Changhoon, Suwon-si Gyeonggi-do 16677 (KR)
(74) Representative: Gulde & Partner
(86) International application number: PCT/KR2024/005904
(87) International publication number: WO 2025/009715

(57) **Abstract**

A water treatment apparatus includes a first ion removal module including a first cation exchange membrane, a first anion exchange membrane, and a first deionization channel therebetween; a second ion removal module including a second cation exchange membrane, a second anion exchange membrane, and a second deionization channel therebetween; and a fluid separation device to separate a fluid, discharged from the first deionization channel, and to guide the fluid. The fluid separation device includes an outer guide to guide a portion of the fluid discharged from the first deionization channel to an outside of the second deionization channel, and a center guide to guide another portion of the fluid from the first deionization channel to the second deionization channel, and the center guide arranged inside of the outer guide..

## Description

### [Technical Field]

The present disclosure relates to a water treatment apparatus using capacitive deionization (CDI) technology.

### [Background Art]

Desalination is a technology widely utilized across industries, involving removal of hardness components, such as calcium and magnesium, from water, thus being used for drinking water or boiler water in regions in which water has high hardness components for the water, or for coolant in power plants or factories.

As an example of the desalination technology, CDI is a technology that removes ions by adsorbing ions to an electrode having a high specific surface area using an electrochemical method.

A capacitive deionization apparatus includes a single flow path, electrodes having a high specific surface area and provided on opposite sides of the flow path to adsorb ions of a fluid flowing inside the flow path, and an ion exchange membrane for selective movement of specific ions. The capacitive deionization apparatus is configured to move ions by an electric field generated in a direction perpendicular to the direction in which the fluid flows inside the flow path.

The fluid flowing inside the flow path is caused to have a slower flow rate as a distance to the ion exchange membrane decreases, and with the flow rate becoming slower, ions may be relatively rapidly removed. The fluid flowing inside the flow path is caused to have a faster flow rate as a distance to the ion exchange membrane increases, and with the flow rate becoming faster, ions may be relatively slowly removed.

### [Disclosure]

### [Technical Problem]

One aspect of the disclosure provides a water treatment apparatus which may have improved efficiency.

The technical objectives of the present disclosure are not limited to the above, and other objectives that are not described above may become apparent to those of ordinary skill in the art based on the following description.

### [Technical Solution]

According to an aspect, there is provided a water treatment apparatus comprising: a first ion removal module comprising a first cation exchange membrane, a first anion exchange membrane, and a first deionization channel between the first cation exchange membrane and the first anion exchange membrane; a second ion removal module comprising a second cation exchange membrane, a second anion exchange membrane, and a second deionization channel between the second cation exchange membrane and the second anion exchange membrane; and a fluid separation device configured to separate a fluid discharged from the first deionization channel, and guide the fluid that is separated, wherein the fluid separation device comprises: an outer guide configured to guide a portion of the fluid discharged from the first deionization channel to an outside of the second deionization channel; and a center guide inside of the outer guide and configured to guide another portion of the fluid discharged from the first deionization channel to the second deionization channel.

According to an aspect, there is provided a water treatment apparatus including: a first ion removal apparatus including a plurality of first ion removal modules; a second ion removal apparatus including at least one second ion removal module; and a fluid separation device configured to guide a portion of fluid discharged from the first ion removal apparatus to the second ion removal apparatus while guiding another portion of the fluid discharged from the first ion removal apparatus to the outside of the second ion removal apparatus. The number of the at least one second ion removal module is smaller than the number of the plurality of first ion removal modules.

### [Description of Drawings]

The above and other aspects, features, and advantages of certain embodiments of the present disclosure will be more apparent from the following description taken in conjunction with the accompanying drawings, in which:
FIG. 1 illustrates a conceptual diagram of a water treatment apparatus according to one or more embodiments of the present disclosure;
FIG. 2 conceptually illustrates a process of ions being removed from a fluid passing through a water treatment apparatus according to one or more embodiments of the present disclosure;
FIG. 3 illustrates a conceptual diagram of a water treatment apparatus according to one or more embodiments of the present disclosure;
FIG. 4 illustrates a conceptual diagram of a water treatment apparatus according to one or more embodiments of the present disclosure;
FIG. 5 illustrates a conceptual diagram of a water treatment apparatus according to one or more embodiments of the present disclosure;
FIG. 6 illustrates a conceptual diagram of a water treatment apparatus according to one or more embodiments of the present disclosure;
FIG. 7 illustrates a conceptual diagram of a water treatment apparatus according to one or more embodiments of the present disclosure;
FIG. 8 illustrates a conceptual diagram of a water treatment apparatus according to one or more embodiments of the present disclosure;
FIG. 9 illustrates a washing machine with a water treatment apparatus according to one or more embodiments of the present disclosure connected thereto;
FIG. 10 refrigerator a cross-section of a washing machine to which a water treatment apparatus according to one or more embodiments of the present disclosure is applied;
FIG. 11 illustrates a refrigerator with a water treatment apparatus according to one or more embodiments of the present disclosure connected thereto;
FIG. 12 illustrates a refrigerator with a water treatment apparatus according to one or more embodiments of the present disclosure connected thereto, while doors of the refrigerator are opened;
FIG. 13 illustrates a cross-section of a refrigerator to which a water treatment apparatus according to one or more embodiments of the present disclosure is applied;
FIG. 14 illustrates a dishwasher with a water treatment apparatus according to one or more embodiments of the present disclosure connected thereto;
FIG. 15 illustrates a cross-section of a dishwasher to which a water treatment apparatus according to one or more embodiments of the present disclosure is applied; and
FIG. 16 illustrates a water purifier to which a water treatment apparatus according to one or more embodiments of the present disclosure is applied.

### [MODES OF THE DISCLOSURE]

The various embodiments of the disclosure and terminology used herein are not intended to limit the technical features of the disclosure to the specific embodiments, but rather should be understood to cover all modifications, equivalents, and alternatives falling within the concept and scope of the disclosure.

In the description of the drawings, like numbers refer to like elements throughout the description of the drawings.

The singular forms preceded by "a," "an," and "the" corresponding to an item are intended to include the plural forms as well unless the context clearly indicates otherwise.

In the disclosure, phrases such as "A or B," "at least one of A and B," "at least one of A or B," "A, B or C," "at least one of A, B and C," and "at least one of A, B, or C" may include any one of the items listed together in the corresponding phrase of the phrases, or any possible combination thereof.

The term "and/or" includes combinations of one or all of a plurality of associated listed items.

As used herein, such terms as "1st" and "2nd," or "first" and "second" may be used to simply distinguish a corresponding component from another, and do not limit the components in other aspects (e.g., importance or order).

When one (e.g., a first) element is referred to as being "coupled" or "connected" to another (e.g., a second) element with or without the term "functionally" or "communicatively," it means that the one element is connected to the other element directly, wirelessly, or via a third element.

It will be understood that the terms "include," "comprise," and/or "have" when used in this specification, specify the presence of stated features, integers, steps, operations, elements, and/or components, but do not preclude the presence or addition of one or more other features, integers, steps, operations, elements, components, and/or groups thereof.

It is to be understood that if a certain component is referred to as being "coupled with," "coupled to," "supported on," or "in contact with" another component, it means that the component may be coupled with the other component directly or indirectly via a third component.

In the description of an embodiment, it will be understood that, when an element is referred to as being "on/under" another element, it may be directly on/under the other element, or one or more elements may also be present.

Water treatment apparatuses according to one or more embodiments may purify contaminated water into clean water. Water treatment apparatuses are used in sewage treatment facilities, industrial processes, and water supply systems in homes or offices, playing an important role in environmental protection and human health. Water purified to clean water by a water treatment apparatus may be discharged back into nature, used for cleaning, used as drinking water, or reused in industrial processes.

According to one or more embodiments, water treatment apparatuses may not only include household water treatment apparatuses, such as water purifiers or water softeners, but also include industrial water treatment apparatuses.

Water treatment apparatuses may purify contaminated water through one or more methods, such as biological treatment methods, chemical treatment methods, and physical treatment methods.

A water treatment apparatus according to an embodiment may purify contaminated water through CDI method.

The CDI method refers to a method of removing ions from contaminated water using the principle of ions being adsorbed to and desorbed from the surface of electrodes by electrical force generated between the electrodes. In the specification, removing ions from contaminated water may include removing ionic substances from contaminated water.

A water treatment apparatus may include one or more components, such as a plurality of pipes through which water flows, a plurality of valves that control the flow of water, and a CDI module that purifies water through a CDI method.

The CDI module may include a housing, electrodes, and ion exchange membranes provided in the housing. Depending on the voltage supplied to the electrodes, ions contained in water introduced into the housing may be adsorbed to or desorbed from the electrodes.

According to one or more embodiments, the water treatment apparatus may further include one or more components, such as a pre-treatment filter for pre-treating raw water and supplying the pre-treated water to the CDI module and/or a post-treatment filter for filtering the water purified by the CDI module once again.

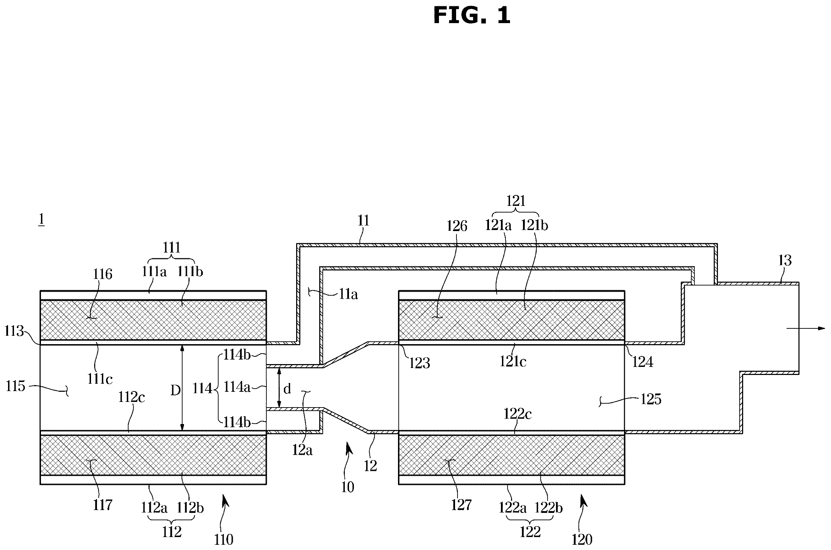

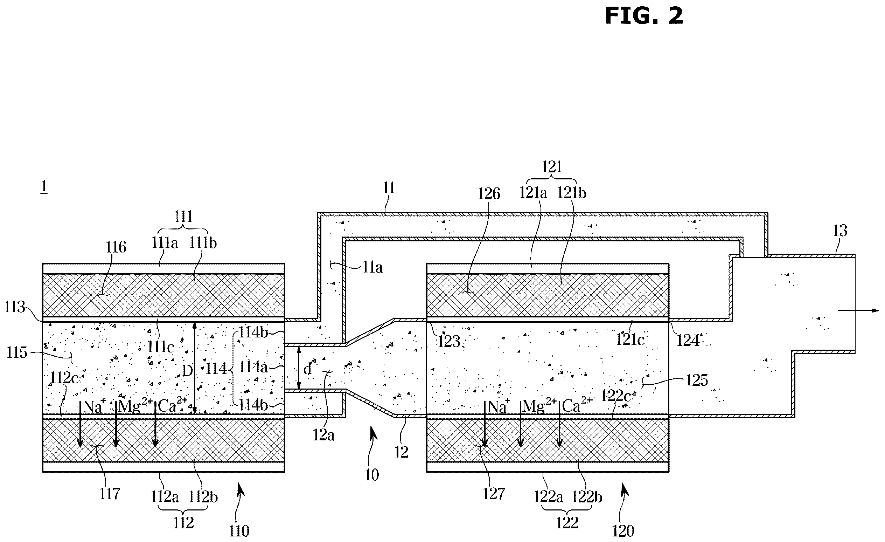

FIG. 1 illustrates a conceptual diagram of a water treatment apparatus according to an embodiment of the present disclosure. FIG. 2 conceptually illustrates a process of ions being removed from a fluid passing through a water treatment apparatus according to an embodiment of the present disclosure.

Referring to FIG. 1 and FIG. 2, the water treatment apparatus 1 according to one embodiment may include a first ion removal module 110.

The first ion removal module 110 may include a first electrode 111 and a second electrode 112. The first electrode 111 and the second electrode 112 may be arranged to face each other. The first electrode 111 and the second electrode 112 may form an electric field.

The first electrode 111 may include a first current collector 111a and a first porous electrode 111b. The first electrode 111 may serve as a positive electrode (an anode) or a negative electrode (a cathode).

In an embodiment, the first current collector 111a may include an electrode plate electrically connected to the first porous electrode 111b. The electrode plate may include a metal plate and/or a non-metallic plate.

The first current collector 111a may include a conductor. For example, the first current collector 111a may include graphite.

The first porous electrode 111b may include a solid electrode including a void space. The first porous electrode 111b may include a material that easily adsorbs ions. For example, the first porous electrode 111b may include a carbon porous electrode.

The second electrode 112 may include a second current collector 112a and a second porous electrode 112b. The second electrode 112 may serve as a positive electrode (an anode) or a negative electrode (a cathode).

In one embodiment, the second current collector 112a may include an electrode plate electrically connected to the second porous electrode 112b. The electrode plate may include a metal plate and/or a non-metallic plate.

The second current collector 112a may include a conductor. The second current collector 112a may include the same configuration as that of the first current collector 111a. For example, the second current collector 112a may include graphite.

The second porous electrode 112b may include a solid electrode including a void space. The second porous electrode 112b may include the same configuration as that of the first porous electrode 111b. The second porous electrode 112b may include a material that easily adsorbs ions. For example, the second porous electrode 112b may include a carbon porous electrode.

The first ion removal module 110 may include a first anion exchange membrane 111c. The first anion exchange membrane 111c may include a membrane that allows only anions among cations and anions to pass therethrough. The first anion exchange membrane 111c takes on a positive charge, allowing only anions to pass therethrough while repelling cations.

The first ion removal module 110 may include a first anion channel 116 formed by the first current collector 111a and the first anion exchange membrane 111c. The first anion channel 116 may include a space between the first current collector 111a and the first anion exchange membrane 111c. The first porous electrode 111b may be provided in the first anion channel 116.

The first ion removal module 110 may include a first cation exchange membrane 112c. The first cation exchange membrane 112c may include a membrane that allows only cations between cations and anions to pass therethrough. The first cation exchange membrane 112c takes on a negative charge, allowing only cations to pass therethrough while repelling anions.

The first ion removal module 110 may include a first cation channel 117 formed by the second current collector 112a and the first cation exchange membrane 112c. The first cation channel 117 may include a space between the second current collector 112a and the first cation exchange membrane 112c. The second porous electrode 112b may be provided in the first cation channel 117.

The first anion exchange membrane 111c and the first cation exchange membrane 112c may include a synthetic resin membrane.

The first ion removal module 110 may include a first deionization channel 115. The first deionization channel 115 may be formed by the first anion exchange membrane 111c and the first cation exchange membrane 112c. The first deionization channel 115 may include a space between the first anion exchange membrane 111c and the first cation exchange membrane 112c. The first electrode 111 may be arranged on one side of the first deionization channel 115, and the second electrode 112 may be arranged on the other side opposite to the one side of the first deionization channel 115.

Since the first anion channel 116, the first cation channel 117, and the first deionization channel 115 are divided from each other by the first anion exchange membrane 111c and the first cation exchange membrane 112c, the channels may also be referred to as compartments, spaces, rooms, or chambers.

The first anion channel 116, the first cation channel 117, and the first deionization channel 115 may be fluidly connected to each other. For example, a fluid in the first deionization channel 115 may move to the first anion channel 116 and/or the first cation channel 117, and conversely, a fluid in the first anion channel 116 and/or a fluid in the first cation channel 117 may move to the first deionization channel 115.

When a positive voltage is applied to the first current collector 111a, the first electrode 111 becomes a positive electrode (an anode), and when a negative voltage is applied to the second current collector 112a, the second electrode 112 becomes a negative electrode (a cathode). Accordingly, when a positive voltage is applied to the first current collector 111a and a negative voltage is applied to the second current collector 112a, cations in the first deionization channel 115 may move to the first cation channel 117, and anions in the first deionization channel 115 may move to the first anion channel 116.

The anions moved to the first anion channel 116 based on a positive voltage being applied to the first current collector 111a may be adsorbed to the first porous electrode 111b, and the cations moved to the first cation channel 117 based on a negative voltage being applied to the second current collector 112a may be adsorbed to the second porous electrode 112b.

The applying of a positive voltage to the first current collector 111a and the applying of a negative voltage to the second current collector 112a may include allowing the potential of the first current collector 111a to be higher than the potential of the second current collector 112a.

When a negative voltage is applied to the first current collector 111a, the first electrode 111 becomes a negative electrode (a cathode), and when a positive voltage is applied to the second current collector 112a, the second electrode 112 becomes a positive electrode (an anode). Accordingly, with a negative voltage being applied to the first current collector 111a and a positive voltage being applied to the second current collector 112a, the cations in the first cation channel 117 may move to the first deionization channel 115 and the anions in the first anion channel 116 may move to the first deionization channel 115.

With a negative voltage being applied to the first current collector 111a, the anions adsorbed to the first porous electrode 111b may be desorbed from the first porous electrode 111b, and with a positive voltage being applied to the second current collector 112a, the cations adsorbed to the second porous electrode 112b may be desorbed from the second porous electrode 112b.

The applying of a negative voltage to the first current collector 111a and the applying of a positive voltage to the second current collector 112a may include allowing the potential of the first current collector 111a to be lower than the potential of the second current collector 112a.

In an embodiment, the first ion removal module 110 may include a first module inlet 113 for introduction of a fluid and a first module outlet 114 for discharge of a fluid. A fluid flowing into the first ion removal module 110 through the first module inlet 113 may pass through the first deionization channel 115. The fluid passed through the first deionization channel 115 may be discharged to the outside of the first ion removal module 110 through the first module outlet 114.

In one or more embodiments, the first ion removal module 110 may be a first deionization cell 110 including a pair of electrodes 111 and 112 and a first deionization channel 115 to remove ions from a fluid. In one or more embodiments, the first ion removal module 110 may be a first deionization stack 110 including a pair of electrodes 111 and 112 and a first deionization channel 115 to remove ions from a fluid.

The water treatment apparatus 1 according to an embodiment may include a second ion removal module 120.

The second ion removal module 120 may include a third electrode 121 and a fourth electrode 122. The third electrode 121 and the fourth electrode 122 may be arranged to face each other. The third electrode 121 and the fourth electrode 122 may form an electric field.

The third electrode 121 may include a third current collector 121a and a third porous electrode 121b. The third electrode 121 may serve as a positive electrode (an anode) or a negative electrode (a cathode).

In an embodiment, the third current collector 121a may include an electrode plate electrically connected to the third porous electrode 121b. The electrode plate may include a metal plate and/or a non-metallic plate.

The third current collector 121a may include a conductor. For example, the third current collector 121a may include graphite.

The third porous electrode 121b may include a solid electrode including a void space. The third porous electrode 121b may include a material that easily adsorbs ions. For example, the third porous electrode 121b may include a carbon porous electrode.

The fourth electrode 122 may include a fourth current collector 122a and a fourth porous electrode 122b. The fourth electrode 122 may serve as a positive electrode (an anode) or a negative electrode (a cathode).

In one embodiment, the fourth current collector 122a may include an electrode plate electrically connected to the fourth porous electrode 122b. The electrode plate may include a metal plate and/or a non-metallic plate.

The fourth current collector 122a may include a conductor. The fourth current collector 122a may include the same configuration as that of the third current collector 121a. For example, the fourth current collector 122a may include graphite.

The fourth porous electrode 122b may include a solid electrode including a void space. The fourth porous electrode 122b may include the same configuration as that of the third porous electrode 121b. The fourth porous electrode 122b may include a material that easily adsorbs ions. For example, the fourth porous electrode 122b may include a carbon porous electrode.

The second ion removal module 120 may include a second anion exchange membrane 121c. The second anion exchange membrane 121c may include a membrane that allows only anions among cations and anions to pass therethrough. The second anion exchange membrane 121c takes on a positive charge, thus allowing only anions to pass therethrough while repelling cations.

The second ion removal module 120 may include a second anion channel 126 formed by the third current collector 121a and the second anion exchange membrane 121c. The second anion channel 126 may include a space between the third current collector 121a and the second anion exchange membrane 121c. The third porous electrode 121b may be provided in the second anion channel 126.

The second ion removal module 120 may include a second cation exchange membrane 122c. The second cation exchange membrane 122c may include a membrane that allows only cations between cations and anions to pass therethrough. The second cation exchange membrane 122c takes on a negative charge, thus allowing only cations to pass therethrough while repelling anions.

The second ion removal module 120 may include a second cation channel 127 formed by the fourth current collector 122a and the second cation exchange membrane 122c. The second cation channel 127 may include a space between the fourth current collector 122a and the second cation exchange membrane 122c. The fourth porous electrode 122b may be provided in the second cation channel 127.

The second anion exchange membrane 121c and the second cation exchange membrane 122c may include a synthetic resin membrane.

The second ion removal module 120 may include a second deionization channel 125. The second deionization channel 125 may be formed by the second anion exchange membrane 121c and the second cation exchange membrane 122c. The second deionization channel 125 may include a space between the second anion exchange membrane 121c and the second cation exchange membrane 122c. The third electrode 121 may be arranged on one side of the second deionization channel 125, and the fourth electrode 122 may be arranged on the other side opposite to the one side of the second deionization channel 125.

Since the second anion channel 126, the second cation channel 127, and the second deionization channel 125 are divided from each other by the second anion exchange membrane 121c and the second cation exchange membrane 122c, the channels may also be referred to as compartments, spaces, rooms, or chambers.

The second anion channel 126, the second cation channel 127, and the second deionization channel 125 may be fluidly connected to each other. For example, a fluid in the second deionization channel 125 may move to the second anion channel 126 and/or the second cation channel 127, and conversely, a fluid in the second anion channel 126 and/or a fluid in the second cation channel 127 may move to the second deionization channel 125.

When a positive voltage is applied to the third current collector 121a, the third electrode 121 becomes a positive electrode (an anode), and when a negative voltage is applied to the fourth current collector 122a, the fourth electrode 122 becomes a negative electrode (a cathode). Accordingly, when a positive voltage is applied to the third current collector 121a and a negative voltage is applied to the fourth current collector 122a, cations in the second deionization channel 125 may move to the second cation channel 127, and anions in the second deionization channel 125 may move to the second anion channel 126.

The anions moved to the second anion channel 126 based on a positive voltage being applied to the third current collector 121a may be adsorbed to the third porous electrode 121b, and the cations moved to the second cation channel 127 based on a negative voltage being applied to the fourth current collector 122a may be adsorbed to the fourth porous electrode 122b.

The applying of a positive voltage to the third current collector 121a and the applying of a negative voltage to the fourth current collector 122a may include allowing the potential of the third current collector 121a to be higher than the potential of the fourth current collector 122a.

When a negative voltage is applied to the third current collector 121a, the third electrode 121 becomes a negative electrode (a cathode), and when a positive voltage is applied to the fourth current collector 122a, the fourth electrode 122 becomes a positive electrode (an anode). Accordingly, with a negative voltage being applied to the third current collector 121a and a positive voltage being applied to the fourth current collector 122a, the cations in the second cation channel 127 may move to the second deionization channel 125, and the anions in the second anion channel 126 may move to the second deionization channel 125.

With a negative voltage being applied to the third current collector 121a, the anions adsorbed to the third porous electrode 121b may be desorbed from the third porous electrode 121b, and with a positive voltage being applied to the fourth current collector 122a, the cations adsorbed to the fourth porous electrode 122b may be desorbed from the fourth porous electrode 122b.

The applying of a negative voltage to the third current collector 121a and the applying of a positive voltage to the fourth current collector 122a may include allowing the potential of the third current collector 121a to be lower than the potential of the fourth current collector 122a.

In an embodiment, the second ion removal module 120 may include a second module inlet 123 for introduction of a fluid and a second module outlet 124 for discharge of a fluid. A fluid flowing into the second ion removal module 120 through the second module inlet 123 may pass through the second deionization channel 125. The fluid passed through the second deionization channel 125 may be discharged to the outside of the second ion removal module 120 through the second module outlet 124.

In one or more embodiments, the second ion removal module 120 may be a second deionization cell 120 including a pair of the third electrode 121 and the fourth electrode 122 and a second deionization channel 125 to remove ions from a fluid. In one or more embodiments, the second ion removal module 120 may be a second deionization stack 120 including a pair the third electrode 121 and the fourth electrode 122 and a second deionization channel 125 to remove ions from a fluid.

A fluid passing through the first deionization channel 115 of the first ion removal module 110 is caused to have a faster flow rate as a distance to the first cation exchange membrane 112c and the first anion exchange membrane 111c increases, and have a slower flow rate as a distance to the first cation exchange membrane 112c and the first anion exchange membrane 111c decreases. Therefore, among fluids passing through the first deionization channel 115, a fluid passing through an area adjacent to the first cation exchange membrane 112c or the first anion exchange membrane 111c may be subject to a relatively faster ion removal, and a fluid passing through an area disposed apart from the first cation exchange membrane 112c or the first anion exchange membrane 111c may be subject to a relatively slower ion removal. Accordingly, among fluids passing through the first deionization channel 115, the ion concentration of a fluid passing through the area adjacent to the first cation exchange membrane 112c or the first anion exchange membrane 111c may be lower than the ion concentration of a fluid passing through the area disposed apart from the first cation exchange membrane 112c and the first anion exchange membrane 111c.

The water treatment apparatus 1 according to one embodiment may include a fluid separation device 10. The fluid separation device 10 may guide the fluids discharged from the first ion removal module 110. The fluid separation device 10 may separate the fluids passed through the first deionization channel 115 based on the ion concentration, and guide the separated fluids.

In one or more embodiments, the fluid separation device 10 may be a flow path separation device 10 configured to separate flow paths for guiding fluids discharged from the first ion removal module 110. In one or more embodiments, the fluid separation device 10 may be a branch device 10 in which fluids discharged from the first ion removal module 110 branches.

In one or more embodiments, the first module outlet 114 of the first ion removal module 110 may include: outer outlets 114b configured to discharge a fluid passed through an outer portion of the first deionization channel 115 that is adjacent to the first cation exchange membrane 112c and a fluid passed through an outer portion of the first deionization channel 115 that is adjacent to the first anion exchange membrane 111c, and a center outlet 114a configured to discharge a fluid passed through a central portion of the first deionization channel 115 that is farther away from the first cation exchange membrane 112c and the first anion exchange membrane 111c than the outer portions of the first deionization channel 115 through which the fluids discharged by the outer outlets 114b pass. The outer outlets 114b may be provided outside of the center outlet 114a. The center outlet 114a may be provided to be spaced apart from the first cation exchange membrane 112c and the first anion exchange membrane 111c.

The fluid separation device 10 may include an outer guide 11. An outer flow path 11a may be formed inside the outer guide 11. The outer guide 11 may be connected to the first module outlet 114. The outer guide 11 may be connected to a portion of the first module outlet 114. The outer guide 11 may be connected to the outer outlet 114b.

The outer guide 11 may extend from the first module outlet 114. The outer guide 11 may extend from the first deionization channel 115. As an example, the outer guide 11 may extend from the first module outlet 114 to a discharge guide 13.

The outer guide 11 may be provided to guide a fluid passed through an area adjacent to the first anion exchange membrane 111c and a fluid passed through an area adjacent to the first cation exchange membrane 112c among fluids discharged from the first deionization channel 115. The outer guide 11 may be provided to guide a fluid discharged through the outer outlet 114b of the first module outlet 114. The outer guide 11 may be provided to guide a fluid passed through an edge of the first deionization channel 115. The outer guide 11 may be provided to guide a fluid, among fluids discharged from the first deionization channel 115, which has a relatively low ion concentration.

As an example, the first ion removal module 110 may have a cylindrical shape, and the first electrode 111 and the second electrode 112 may be provided along the outer circumference of the first ion removal module 110, and the outer guide 11 may guide a fluid passed through a radially outer circumference of the first deionization channel 115. For example, the outer outlet 114b of the first module outlet 114 may include a radial outer portion of the first module outlet 114.

As an example, the first ion removal module 110 may have a square pillar shape, the first electrode 111 may be provided on a first side portion of the first ion removal module 110, and the second electrode 112 may be provided on a second side portion facing the first side portion of the first ion removal module 110, and the outer guide 11 may guide a fluid passed through an area adjacent to the first side portion and a fluid passed through an area adjacent to the second side portion. For example, the outer outlets 114b of the first module outlet 114 may include both side portions of the first module outlet 114 that face each other.

The outer guide 11 may be provided to guide a portion of the fluid discharged from the first deionization channel 115 to the outside of the second ion removal module 120. The outer guide 11 may guide a portion of the fluid discharged from the first deionization channel 115 such that the portion is prevented from passing through the second ion removal module 120. The outer guide 11 may guide a portion of the fluid discharged from the first deionization channel 115 such that the portion bypasses the second ion removal module 120.

The fluid separation device 10 may include a center guide 12. A center flow path 12a may be formed inside the center guide 12. The center guide 12 may be connected to the first module outlet 114. The center guide 12 may be connected to a portion, which is not the portion connected to the outer guide 11, of the first module outlet 114. The center guide 12 may be connected to the center outlet 114a. The center guide 12 may be provided separately from the outer guide 11, or may be provided as one part with the outer guide 11.

The center guide 12 may connect the first ion removal module 110 to the second ion removal module 120. The center guide 12 may extend between the first deionization channel 115 and the second deionization channel 125. The center guide 12 may extend from the first module outlet 114 to the second module inlet 123. The center guide 12 may include a portion in which the width of the center flow path 12a increases in a direction from the first deionization channel 115 to the second deionization channel 125.

The center guide 12 may be separated from the outer guide 11. The center guide 12 may be divided from the outer guide 11. The outer guide 11 and the center guide 12 may be configured such that a fluid flowing in the outer flow path 11a and a fluid flowing in the center flow path 12a do not mix with each other. In one or more embodiments, the outer guide 11 and the center guide 12 may be configured to be divided from each other to prevent a fluid passing through the outer guide 11 and a fluid passing through the center guide 12 from mixing with each other.

The center guide 12 may be provided to guide a fluid, among the fluids discharged from the first deionization channel 115, which has passed through an area farther away from the first anion exchange membrane 111c and the first cation exchange membrane 112c than an area through which the fluid guided by the outer guide 11 passes. The center guide 12 may be provided to guide a fluid, among the fluids discharged from the first deionization channel 115, which is discharged through the center outlet 114a. The center guide 12 may guide a fluid, among the fluids discharged from the first deionization channel 115, which has a relatively high ion concentration.

As an example, the first ion removal module 110 may have a cylindrical shape, and the first electrode 111 and the second electrode 112 may be provided along the outer circumference of the first ion removal module 110, and the center guide 12 may guide a fluid passed through a radial center area of the first deionization channel 115. For example, the center outlet 114a of the first module outlet 114 may include a radial inner center portion of the first module outlet 114.

As an example, the first ion removal module 110 may have a square pillar shape, the first electrode 111 may be provided on a first side portion of the first ion removal module 110, and the second electrode 112 may be provided on a second side portion facing the first side portion of the first ion removal module 110, and the center guide 12 may be provided between the first side portion and the second side portion, and guide a fluid passed through a central portion spaced apart from the first side portion and the second side portion. For example, the center outlet 114a of the first module outlet 114 may include a portion between both side portions of the first module outlet 114.

The center guide 12 may guide a portion of the fluid discharged from the first deionization channel 115 to the second ion removal module 120. The center guide 12 may guide a portion of the fluid discharged from the first deionization channel 115 such that the portion passes through the second ion removal module 120.

In one or more embodiments, the outer guide 11 and/or the center guide 12 may include a pipe for guiding a fluid. In one or more embodiments, the outer guide 11 and/or the center guide 12 may include a hose for guiding a fluid. In one or more embodiments, the outer guide 11 and/or the center guide 12 may include a duct for guiding a fluid. In one or more embodiments, the outer guide 11 and/or the center guide 12 may include a tube for guiding a fluid. In one or more embodiments, the outer guide 11 and/or the center guide 12 may include a conduit for guiding a fluid. In one or more embodiments, the outer guide 11 and/or the center guide 12 may be an extension member that extends to guide a fluid. In one or more embodiments, the outer guide 11 and/or the center guide 12 may be a connecting member connecting any two components to guide a fluid. In one or more embodiments, the outer guide 11 and/or the center guide 12 may be a line for guiding a fluid.

In one or more embodiments, the outer guide 11 and the center guide 12 may be configured to separate the fluids discharged from the first deionization channel 115 based on the ion concentrations of the fluids passed through the first deionization channel 115.

The outer guide 11 and the center guide 12 may be provided to be symmetrical with respect to a central axis along a direction in which a fluid of the first deionization channel 115 flows.

In one or more embodiments, the center flow path 12a of the center guide 12 for guiding a fluid passed through the first deionization channel 115 to be directed to the second ion removal module 120 may have a width d that is set considering the efficiency of acquiring a fluid, in which ions are removed, through the outer guide 11.

**Table 1**

| Width of center flow path/ Width of first deionization channel | 1/6 | 1/3 | 1/2 | 2/3 | 5/6 |
|---|---|---|---|---|---|
| Ratio of separation by outer guide | 0.75 | 0.52 | 0.31 | 0.15 | 0.04 |
| Improved removal rate (%) | 1.5 | 3.6 | 5.9 | 8.6 | 11.5 |
| Acquisition efficiency | 1.13 | 1.87 | 1.83 | 1.23 | 0.46 |

Referring to Table 1, when the width d of the center flow path 12a is 1/6 of the width D of the first deionization channel 115, a ratio of a fluid separated by the outer guide 11 among fluids discharged from the first deionization channel 115 is approximately 0.75, and the fluid separated by the outer guide 11 has an ion removal rate that is improved by approximately 1.5% compared to a case in which the fluid separation device 10 is not applied., and the acquisition efficiency, defined as the product of the ratio of a fluid separated by the outer guide 11 and the improved ion removal rate, is approximately 1.13.

When the width d of the center flow path 12a is 1/3 of the width D of the first deionization channel 115, a ratio of a fluid separated by the outer guide 11 among fluids discharged from the first deionization channel 115 is approximately 0.52, and the fluid separated by the outer guide 11 has an ion removal rate that is improved by approximately 3.6% compared to a case in which the fluid separation device 10 is not applied. Therefore, the acquisition efficiency is approximately 1.87.

When the width d of the center flow path 12a is 1/2 of the width D of the first deionization channel 115, a ratio of a fluid separated by the outer guide 11 among fluids discharged from the first deionization channel 115 is approximately 0.31, and the fluid separated by the outer guide 11 has an ion removal rate that is improved by approximately 5.9% compared to a case in which the fluid separation device 10 is not applied. Therefore, the acquisition efficiency is approximately 1.83.

When the width d of the center flow path 12a is 2/3 of the width D of the first deionization channel 115, a fluid separated by the outer guide 11 among fluids discharged from the first deionization channel 115 is approximately 0.15, and the fluid separated by the outer guide 11 has an ion removal rate that is improved by approximately 8.6% compared to a case in which the fluid separation device 10 is not applied. Therefore, the acquisition efficiency is approximately 1.29.

When the width d of the center flow path 12a is 5/6 of the width D of the first deionization channel 115, a fluid separated by an outer guide 11 among fluids discharged from the first deionization channel 115 is approximately 0.04, and the fluid separated by the outer guide 11 has an ion removal rate that is improved by approximately 11.5% compared to a case in which e the fluid separation device 10 is not applied. Therefore, the acquisition efficiency is approximately 0.46.

For example, in consideration of the above-described acquisition efficiency, the water treatment apparatus 1 may be configured such that the width d of the center flow path 12a is greater than or equal to 1/3 or less than or equal to 1/2 of the width D of the first deionization channel 115.

The water treatment apparatus 1 may include the discharge guide 13. The discharge guide 13 may guide a fluid discharged from the second ion removal module 120. The discharge guide 13 may guide a fluid discharged from the second ion removal module 120 to the outside of the water treatment apparatus 1. The outer guide 11 may be connected to the discharge guide 13.

The water treatment apparatus 1 according to an embodiment of the present disclosure may be implemented to, among fluids passed through the first ion removal module 110, guide only a fluid with a relatively high ion concentration to additionally remove ions from the fluid by the second ion removal module 120 while allowing a fluid with a relatively low ion concentration to be used without passing through the second ion removal module 120, and thus the efficiency may be improved.

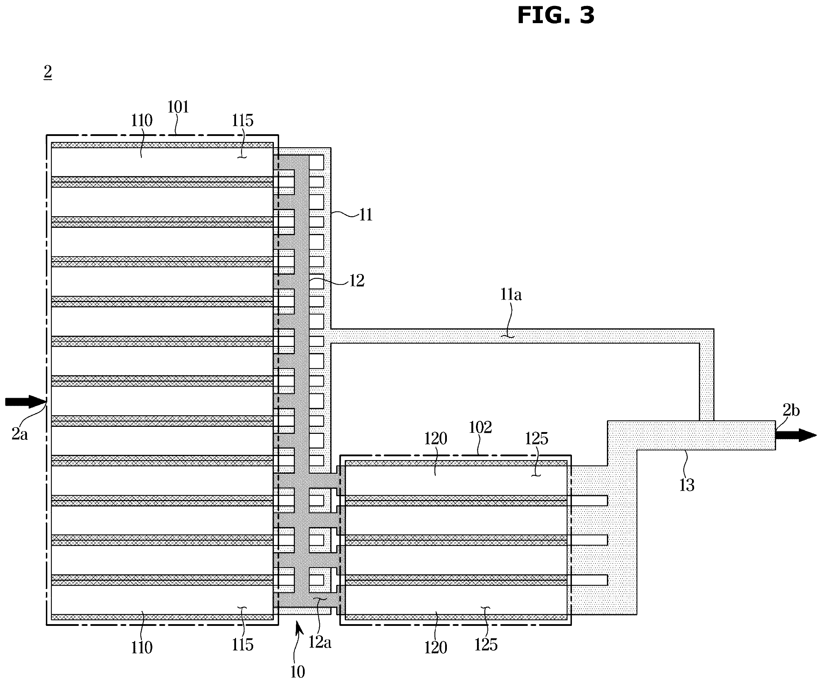

FIG. 3 illustrates a conceptual diagram of a water treatment apparatus according to an embodiment of the present disclosure.

With reference to FIG. 3, a water treatment apparatus 2 according to an embodiment of the present disclosure will be described. The same reference numerals are assigned to the same configurations as those of the water treatment apparatus 1 described above with reference to FIG. 1, and detailed description thereof may be omitted.

Referring to FIG. 3, the water treatment apparatus 2 according to an embodiment of the present disclosure may include a first ion removal apparatus 101.

The first ion removal apparatus 101 may include a plurality of first ion removal modules 110. The plurality of first ion removal modules 110 may include the same configurations as those of the first ion removal module 110 shown in FIG. 1.

The plurality of first ion removal modules 110 may be arranged along a direction perpendicular to a direction in which a fluid passes through the plurality of first ion removal modules 110. The plurality of first ion removal modules 110 may be stacked in a direction perpendicular to a direction in which a first deionization channel 115, which is formed inside each of the plurality of first ion removal modules 110, extends.

The water treatment apparatus 2 according to an embodiment of the present disclosure may include a second ion removal apparatus 102.

The second ion removal apparatus 102 may include at least one second ion removal module 120. The at least one second ion removal module 120 may include the same configurations as those of the second ion removal module 120 shown in FIG. 1.

For example, the second ion removal apparatus 102 may include a plurality of second ion removal modules 120. The plurality of second ion removal modules 120 may be arranged along a direction perpendicular to a direction in which a fluid passes through the plurality of second ion removal modules 120. The plurality of second ion removal modules 120 may be stacked in a direction perpendicular to a direction in which a second deionization channel 125, which is formed inside each of the plurality of second ion removal modules 120, extends.

The water treatment apparatus 2 according to an embodiment of the present disclosure may include a fluid separation device 10. The fluid separation device 10 may separate a fluid discharged from the plurality of first ion removal modules 110 of the first ion removal apparatus 101 and guide the separated fluid.

In one or more embodiments, the fluid separation device 10 may include a center guide 12 configured to guide a fluid having a relatively high ion concentration among fluids discharged from the plurality of first ion removal modules 110 to the at least one second ion removal module 120. For example, the center guide 12 may be configured to collect fluids having a relatively high ion concentrations among fluids discharged from the plurality of first ion removal modules 110, and then guide the collected fluid in a distributed manner to the at least one second ion removal module 120. A center flow path 12a may be formed inside the center guide 12.

Since the water treatment apparatus 2 according to an embodiment of the present disclosure is configured to allow the center guide 12 of the fluid separation device 10 to collect fluids having a relatively high ion concentration among fluids discharged from the plurality of first ion removal modules 110 and then guide the collected fluid in a distributed manner to the at least one second ion removal module 120, the number of the at least one second ion removal module 120 provided in the second ion removal apparatus 102 may be set to be smaller than the number of the plurality of first ion removal modules 110 provided in the first ion removal apparatus 101. Since the water treatment apparatus 2 according to an embodiment of the present disclosure includes at least one second ion removal module 120 provided in the second ion removal apparatus 102 to be fewer than the plurality of first ion removal modules 110 provided in the first ion removal apparatus 101, the efficiency may be improved.

In one or more embodiments, the fluid separation device 10 may include an outer guide 11 for guiding a fluid with a relatively low ion concentration among fluids discharged from the plurality of first ion removal modules 110. For example, the outer guide 11 may extend from the plurality of first ion removal modules 110 to the discharge guide 13. An outer flow path 11a may be formed inside the outer guide 11.

Since the water treatment apparatus 2 according to an embodiment of the present disclosure is implemented to, among fluids passed through the plurality of first ion removal modules 110, guide only a fluid with a relatively high ion concentration to additionally remove ions from the fluid by the at least one second ion removal module 120 while allowing a fluid with a relatively low ion concentration to be used without passing through the at least one second ion removal module 120, and thus the efficiency may be improved.

The water treatment apparatus 2 according to an embodiment of the present disclosure may include the discharge guide 13 for guiding the fluid discharged from the at least one second ion removal module 120.

The water treatment apparatus 2 according to an embodiment of the present disclosure may include an apparatus inlet 2a for introduction of a fluid, and an apparatus outlet 2b for discharge of fluid. A fluid flowing into the water treatment apparatus 2 through the apparatus inlet 2a may be guided to each of the plurality of first ion removal modules 110 of the first ion removal apparatus 101. A fluid passed through the first ion removal apparatus 101 and then guided by the outer guide 11, and a fluid passed through the first ion removal apparatus 101, guided by the center guide 12 and then passed through the second ion removal apparatus 102 may be guide through the discharge guide 13 and flow to the apparatus outlet 2b. Through the apparatus outlet 2b, the fluid in the discharge guide 13 may be discharged to the outside of the water treatment apparatus 2.

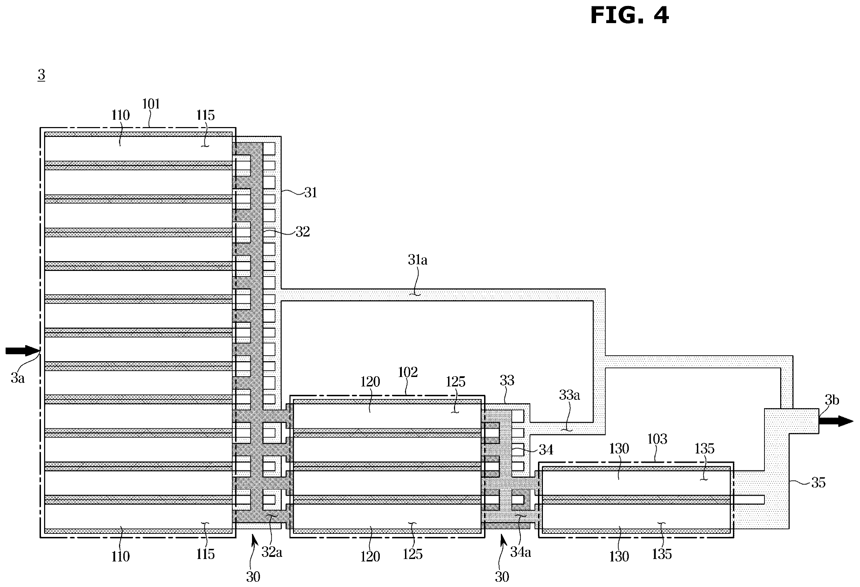

FIG. 4 illustrates a conceptual diagram of a water treatment apparatus according to an embodiment of the present disclosure.

With reference to FIG. 4, a water treatment apparatus 3 according to an embodiment of the present disclosure will be described. The same reference numerals are assigned to the same configurations as those of the water treatment apparatus 1 described above with reference to FIG. 1, and detailed description thereof may be omitted.

Referring to FIG. 4, the water treatment apparatus 3 according to an embodiment of the present disclosure may include a first ion removal apparatus 101. The first ion removal apparatus 101 may include the same configurations as those of the first ion removal apparatus 101 shown in FIG. 3. For example, the first ion removal apparatus 101 may include a plurality of first ion removal modules 110.

The water treatment apparatus 3 according to an embodiment of the present disclosure may include a second ion removal apparatus 102. The second ion removal apparatus 102 may be provided to remove ions from a portion of fluids having passed through the first ion removal apparatus 101. The second ion removal apparatus 102 may be provided to remove ions from a fluid, among fluids having passed through the first ion removal apparatus 101, which has a relatively high ion concentration. The second ion removal apparatus 102 may include the same configurations as those of the second ion removal apparatus 102 shown in FIG. 3. For example, the second ion removal apparatus 102 may include a plurality of second ion removal modules 120.

The water treatment apparatus 3 according to an embodiment of the present disclosure may include a third ion removal apparatus 103. The third ion removal apparatus 103 may be provided to remove ions from a portion of fluids having passed through the second ion removal apparatus 102. The third ion removal apparatus 103 may be provided to remove ions from a fluid, among fluids having passed through the second ion removal apparatus 102, which has a relatively high ion concentration. The third ion removal apparatus 103 may include at least one third ion removal module 130. The at least one third ion removal module 130 may include the same configurations as those of the first ion removal module 110 and/or the second ion removal module 120.

For example, the third ion removal apparatus 103 may include a plurality of third ion removal modules 130. The plurality of third ion removal modules 130 may be arranged along a direction perpendicular to a direction in which a fluid passes through the plurality of third ion removal modules 130. The plurality of third ion removal modules 130 may be stacked in a direction perpendicular to a direction in which a third deionization channel 135, which is formed inside each of the plurality of third ion removal modules 130, extends.

The water treatment apparatus 3 according to an embodiment of the present disclosure may include a fluid separation device 30. The fluid separation device 30 may separate a fluid discharged from the plurality of first ion removal modules 110 of the first ion removal apparatus 101 and guide the separated fluid, and may separate a fluid discharged from the plurality of second ion removal modules 120 and guide the separated fluid.

In one or more embodiments, the fluid separation device 30 may include a first center guide 32 configured to guide a fluid , among fluids discharged from the plurality of first ion removal modules 110, which has a relatively high ion concentration to the plurality of second ion removal modules 120. For example, the first center guide 32 may be configured to collect fluids having a relatively high ion concentration among fluids discharged from the plurality of first ion removal modules 110 and then guide the collected fluid in a distributed manner to the plurality of second ion removal modules 120. A first center flow path 32a may be formed inside the first center guide 32.

In one or more embodiments, the fluid separation device 30 may include a first outer guide 31 for guiding a fluid, among fluids discharged from the plurality of first ion removal modules 110, which has a relatively low ion concentration. For example, the first outer guide 31 may extend from the plurality of first ion removal modules 110 to the discharge guide 35. A first outer flow path 31a may be formed inside the first outer guide 31.

In one or more embodiments, the fluid separation device 30 may include a second center guide 34 configured to guide a fluid, among fluids discharged from the plurality of second ion removal modules 120, which has a relatively high ion concentration to the at least one third ion removal module 130. For example, the second center guide 34 may be configured to collect fluids having a relatively high ion concentrations among fluids discharged from the plurality of second ion removal modules 120, and guide the collected fluid in a distributed manner to the at least one third ion removal module 130. A second center flow path 34a may be formed inside the second center guide 34.

In one or more embodiments, the fluid separation device 30 may include a second outer guide 33 for guiding a fluid, among fluids discharged from the plurality of second ion removal modules 120, which has a relatively low ion concentration. For example, the second outer guide 33 may extend from the plurality of second ion removal modules 120 to the discharge guide 35. For example, the second outer guide 33 may extend to the discharge guide 35 together with the first outer guide 31. A second outer flow path 33a may be formed inside the second outer guide 33.

Since the water treatment apparatus 3 according to an embodiment of the present disclosure is configured to allow the first center guide 32 of the fluid separation device 30 to collect fluids having a relatively high ion concentration among fluids discharged from the plurality of first ion removal modules 110 and then guide the collected fluid in a distributed manner to the plurality of second ion removal modules 120, the number of the plurality of second ion removal modules 120 provided in the second ion removal apparatus 102 may be set to be smaller than the number of the plurality of first ion removal modules 110 provided in the first ion removal apparatus 101. In addition, since the water treatment apparatus 3 according to an embodiment of the present disclosure is configured to allow the second center guide 34 of the fluid separation device 30 to collect fluids having a relatively high ion concentration among fluids discharged from the plurality of second ion removal modules 120 and then guide the collected fluid in a distributed manner to the at least one third ion removal module 130, the number of the at least one third ion removal module 130 provided in the third ion removal apparatus 103 may be set to be smaller than the number of the plurality of second ion removal modules 120 provided in the second ion removal apparatus 102.

Since the water treatment apparatus 3 according to an embodiment of the present disclosure includes the plurality of second ion removal modules 120 provided in the second ion removal apparatus 102 to be fewer than the plurality of first ion removal modules 110 provided in the first ion removal apparatus 101, the efficiency may be improved. In addition, since the water treatment apparatus 3 according to an embodiment of the present disclosure includes the at least one third ion removal module 130 provided in the third ion removal apparatus 103 to be fewer than the plurality of second ion removal modules 120 provided in the second ion removal apparatus 102, the efficiency may be improved.

Since the water treatment apparatus 3 according to an embodiment of the present disclosure is implemented to, among fluids passed through the plurality of first ion removal modules 110, guide only a fluid with a relatively high ion concentration to additionally remove ions from the fluid by the plurality of second ion removal module 120 while allowing a fluid with a relatively low ion concentration to be used without passing through the at least one second ion removal module 120, and thus the efficiency may be improved. In addition, since the water treatment apparatus 3 according to an embodiment of the present disclosure is implemented to, among fluids passed through the plurality of second ion removal modules 120, guide only a fluid with a relatively high ion concentration to remove ions from the fluid by the at least one third ion removal module 130 while allowing a fluid with a relatively low ion concentration to be used without passing through the at least one third ion removal module 130, and thus the efficiency may be improved.

The water treatment apparatus 3 according to an embodiment of the present disclosure may include a discharge guide 35 for guiding the fluid discharged from the at least one third ion removal module 120.

The water treatment apparatus 3 according to an embodiment of the present disclosure may include an apparatus inlet 3a for introduction of a fluid, and an apparatus outlet 3b for discharge of fluid. A fluid flowing into the water treatment apparatus 3 through the apparatus inlet 3a may be guided to each of the plurality of first ion removal modules 110 of the first ion removal apparatus 101. A fluid passed through the first ion removal apparatus 101 and then guided by the first outer guide 31 may be guided through the discharge guide 35 and flow to the apparatus outlet 3b. Among fluids passed through the first ion removal apparatus 101 and then guided by the first center guide 32 and passed through the second ion removal apparatus 102, a fluid guided by the second outer guide 33 may be guided through the discharge guide 35 and flow to the apparatus outlet 3b. Among fluids passed through the first ion removal apparatus 101 and then guided by the first center guide 32 and passed through the second ion removal apparatus 102, a fluid guided by the second center guide 34 and then flowing into and through the third ion removal apparatus 103 may be guided through the discharge guide 35 and flow to the apparatus outlet 3b. Through the apparatus outlet 3b, the fluids in the discharge guide 35 may be discharged to the outside of the water treatment apparatus 3.

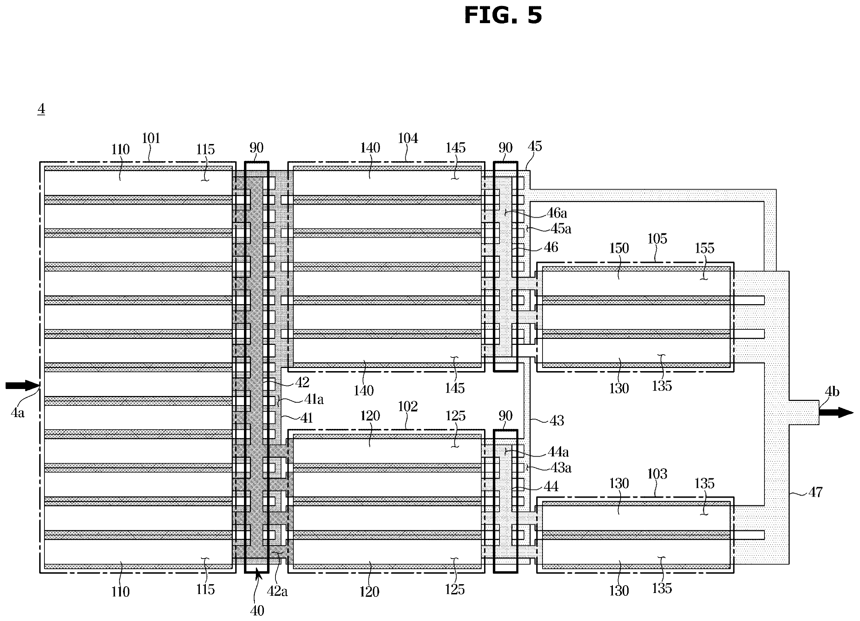

FIG. 5 illustrates a conceptual diagram of a water treatment apparatus according to an embodiment of the present disclosure.

With reference to FIG. 5, a water treatment apparatus 4 according to an embodiment of the present disclosure will be described. The same reference numerals are assigned to the same configurations as those of the water treatment apparatus 1 described above with reference to FIG. 1, and detailed description thereof may be omitted.

Referring to FIG. 5, the water treatment apparatus 4 according to an embodiment of the present disclosure may include a first ion removal apparatus 101. The first ion removal apparatus 101 may include the same configurations as those of the first ion removal apparatus 101 shown in FIG. 3. For example, the first ion removal apparatus 101 may include a plurality of first ion removal modules 110.

The water treatment apparatus 4 according to an embodiment of the present disclosure may include a second ion removal apparatus 102. The second ion removal apparatus 102 may be provided to remove ions from a portion of the fluid that has passed through the first ion removal apparatus 101. The second ion removal apparatus 102 may be provided to remove ions from a fluid, among fluids that have passed through the first ion removal apparatus 101, which has a relatively high ion concentration. The second ion removal apparatus 102 may include the same configurations as those of the second ion removal apparatus 102 shown in FIG. 3. For example, the second ion removal apparatus 102 may include a plurality of second ion removal modules 120.

The water treatment apparatus 4 according to an embodiment of the present disclosure may include a third ion removal apparatus 103. The third ion removal apparatus 103 may be provided to remove ions from a portion of the fluid that has passed through the second ion removal apparatus 103. The third ion removal apparatus 103 may be provided to remove ions from a fluid, among fluids having passed through the second ion removal apparatus 103, which has a relatively high ion concentration. The third ion removal apparatus 103 may include the same configurations as those of the third ion removal apparatus 103 shown in FIG. 4. For example, the third ion removal apparatus 103 may include a plurality of third ion removal modules 130.

The water treatment apparatus 4 according to an embodiment of the present disclosure may include a fourth ion removal apparatus 104. The fourth ion removal apparatus 104 may be provided to remove ions from a portion of the fluid that has passed through the first ion removal apparatus 101. The fourth ion removal apparatus 104 may be provided to remove ions from a fluid, among fluids having passed through the first ion removal apparatus 101, which has a relatively low ion concentration. The fourth ion removal apparatus 104 may include at least one fourth ion removal modules 140. The at least one fourth ion removal module 140 may include the same configurations as those of the first ion removal module 110, the second ion removal module 130, and/or the third ion removal module 130.

For example, the fourth ion removal apparatus 104 may include a plurality of fourth ion removal modules 140. The plurality of fourth ion removal modules 140 may be arranged along a direction perpendicular to a direction in which a fluid passes through the plurality of fourth ion removal modules 140. The plurality of fourth ion removal modules 140 may be stacked in a direction perpendicular to a direction in which a fourth deionization channel 145, which is formed inside each of the plurality of fourth ion removal modules 140, extends.

The water treatment apparatus 4 according to an embodiment of the present disclosure may include a fifth ion removal apparatus 105. The fifth ion removal apparatus 105 may be provided to remove ions from a portion of the fluid that has passed through the fourth ion removal apparatus 104. The fifth ion removal apparatus 105 may be provided to remove ions from a fluid, among fluids having passed through the fourth ion removal apparatus 104, which has a relatively low ion concentration. The fifth ion removal apparatus 105 may include at least one fifth ion removal modules 150. The at least one fifth ion removal module 140 may include the same configurations as those of the first ion removal module 110, the second ion removal module 130, the third ion removal module 130, and/or the fourth ion removal module 140.

For example, the fifth ion removal apparatus 105 may include a plurality of fifth ion removal modules 150. The plurality of fifth ion removal modules 150 may be arranged along a direction perpendicular to a direction in which a fluid passes through the plurality of fifth ion removal modules 150. The plurality of fifth ion removal modules 140 may be stacked in a direction perpendicular to a direction in which a fifth deionization channel 155, which is formed inside each of the plurality of fifth ion removal modules 150, extends.

The water treatment apparatus 4 according to an embodiment of the present disclosure may include a fluid separation device 40. The fluid separation device 40 may separate fluids discharged from the plurality of first ion removal modules 110 of the first ion removal apparatus 101 and guide the fluids, and may separate fluids discharged from the plurality of second ion removal modules 120 and guide the fluids, and may separate fluids discharged from the plurality of fourth ion removal modules 140 and guide the fluids.

In one or more embodiments, the fluid separation device 40 may include a first center guide 42 configured to guide a fluid, among fluids discharged from the plurality of first ion removal modules 110, which has a relatively high ion concentration to the plurality of second ion removal modules 120. For example, the first center guide 42 may be configured to collect fluids having a relatively high ion concentration among fluids discharged from the plurality of first ion removal modules 110 and then guide the collected fluid in a distributed manner to the plurality of second ion removal modules 120. A first center flow path 42a may be formed inside the first center guide 42.

In one or more embodiments, the fluid separation device 40 may include a first outer guide 41 configured to guide a fluid, among fluids discharged from the plurality of first ion removal modules 110, which has a relatively low ion concentration. For example, the first outer guide 41 may be configured to collect fluids having a relatively low ion concentration among fluids discharged from the plurality of first ion removal modules 110 and then guide the collected fluid in a distributed manner to the plurality of fourth ion removal modules 140. A first outer flow path 41a may be formed inside the first outer guide 41.

In one or more embodiments, the fluid separation device 40 may include a second center guide 44 configured to guide a fluid, among fluids discharged from the plurality of second ion removal modules 120, which has a relatively high ion concentration to the at least one third ion removal module 130. For example, the second center guide 44 may be configured to collect fluids having a relatively high ion concentration among fluids discharged from the plurality of second ion removal modules 120 and then guide the collected fluid in a distributed manner to the at least one third ion removal module 130. A second center flow path 44a may be formed inside the second center guide 44.

In one or more embodiments, the fluid separation device 40 may include a second outer guide 43 configured to guide a fluid, among fluids discharged from the plurality of second ion removal modules 120, which has a relatively low ion concentration. For example, the second outer guide 43 may extend from the plurality of second ion removal modules 120 to the discharge guide 47. For example, the second outer guide 43 may extend to the discharge guide 47 together with the third outer guide 45. A second outer flow path 43a may be formed inside the second outer guide 43.

In one or more embodiments, the fluid separation device 40 may include a third center guide 46 configured to guide a fluid, among fluids discharged from the plurality of fourth ion removal modules 140, which has a relatively high ion concentration to the at least one fifth ion removal module 150. For example, the third center guide 46 may be configured to collect fluids having a relatively high ion concentration among fluids discharged from the plurality of fourth ion removal modules 140 and then guide the collected fluid in a distributed manner to the at least one fifth ion removal module 150. A third center flow path 46a may be formed inside the third center guide 46.

In one or more embodiments, the fluid separation device 40 may include a third outer guide 45 configured to guide a fluid, among fluids discharged from the plurality of fourth ion removal modules 140, which has a relatively low ion concentration. For example, the third outer guide 45 may extend from the plurality of fourth ion removal modules 140 to the discharge guide 47. For example, the third outer guide 45 may extend to the discharge guide 47 together with the second outer guide 43. A third outer flow path 45a may be formed inside the third outer guide 45.

Since the water treatment apparatus 4 according to an embodiment of the present disclosure is implemented to collect fluids with a relatively high ion concentration among fluids discharged from the plurality of first ion removal modules 110 and guide the collected fluid in a distributed manner to the plurality of second ion removal modules 120, and collect fluids with a relatively low ion concentration and guide the collected fluid in a distributed manner to the plurality of fourth ion removal modules 140, the plurality of fourth ion removal modules 140 may be supplied with a voltage lower than that applied to the plurality of second ion removal modules 120.

Since the water treatment apparatus 4 according to an embodiment of the present disclosure is implemented to, among fluids discharged from the plurality of second ion removal modules 120 admitting fluids with a relatively high ion concentration, collect fluids with a relatively high ion concentration and guide the collected fluid in a distributed manner to the plurality of third ion removal modules 130, and is implemented to, among fluids discharged from the plurality of fourth ion removal modules 140 admitting fluids with a relatively low ion concentration, collect fluids with a relatively high ion concentration and guide the collected fluid in a distributed manner to the plurality of fifth ion removal modules 150, the plurality of fifth ion removal modules 150 may be supplied with a voltage lower than that applied to the plurality of third ion removal modules 130.

With such a configuration, the water treatment apparatus 4 according to an embodiment of the present disclosure may have reduced power consumption.

The water treatment apparatus 4 according to an embodiment of the present disclosure may include a sensor 90 configured to measure the ion concentration of the fluid passing through the fluid separation device 40. The sensor 90 may be provided to measure the ion concentration of the fluid passing through at least one of the first outer guide 41, the first center guide 42, the second center guide 44, or the third center guide 46.

For example, the water treatment apparatus 4 may be provided to, based on an ion concentration value of the fluid passing through the first outer guide 41 that is measured by the sensor 90, adjust a voltage applied to the plurality of fourth ion removal modules 140. For example, the water treatment apparatus 4 may be provided to, based on an ion concentration value of the fluid passing through the first center guide 42 that is measured by the sensor 90, adjust a voltage applied to the plurality of second ion removal modules 120. For example, the water treatment apparatus 4 may be provided to, based on an ion concentration value of the fluid passing through the second center guide 44 that is measured by the sensor 90, adjust a voltage applied to the at least one third ion removal modules 130. For example, the water treatment apparatus 4 may be provided to, based on an ion concentration value of the fluid passing through the third center guide 46 that is measured by the sensor 90, adjust a voltage applied to the at least one fifth ion removal modules 150.

The water treatment apparatus 4 according to an embodiment of the present disclosure may allow a fluid with a relatively low ion concentration among the fluids passed through the plurality of second ion removal modules 120and a fluid with a relatively low ion concentration among the fluids passed through the plurality of fourth ion removal modules 140 to be used without additionally passing through ion removal modules, and thus the efficiency may be improved.

The water treatment apparatus 4 according to an embodiment of the present disclosure may include the discharge guide 47 for guiding the fluid discharged from the at least one third ion removal module 130 and the at least one fifth ion removal module 150.

The water treatment apparatus 4 according to an embodiment of the present disclosure may include an apparatus inlet 4a for introduction of a fluid, and an apparatus outlet 4b for discharge of fluid. A fluid flowing into the water treatment apparatus 4 through the apparatus inlet 4a may be guided to each of the plurality of first ion removal modules 110 of the first ion removal apparatus 101. A fluid passed through the second ion removal apparatus 102 and then guided by the second outer guide 43, and a fluid passed through the fourth ion removal apparatus 104 and then guided by the third outer guide 45 may be guide through the discharge guide 47 and flow to the apparatus outlet 4b. A fluid passed through the third ion removal apparatus 103, and a fluid passed through the fifth ion removal apparatus 105may be guide through the discharge guide 47 and flow to the apparatus outlet 4b. Through the apparatus outlet 4b, the fluids in the discharge guide 47 may be discharged to the outside of the water treatment apparatus 4.

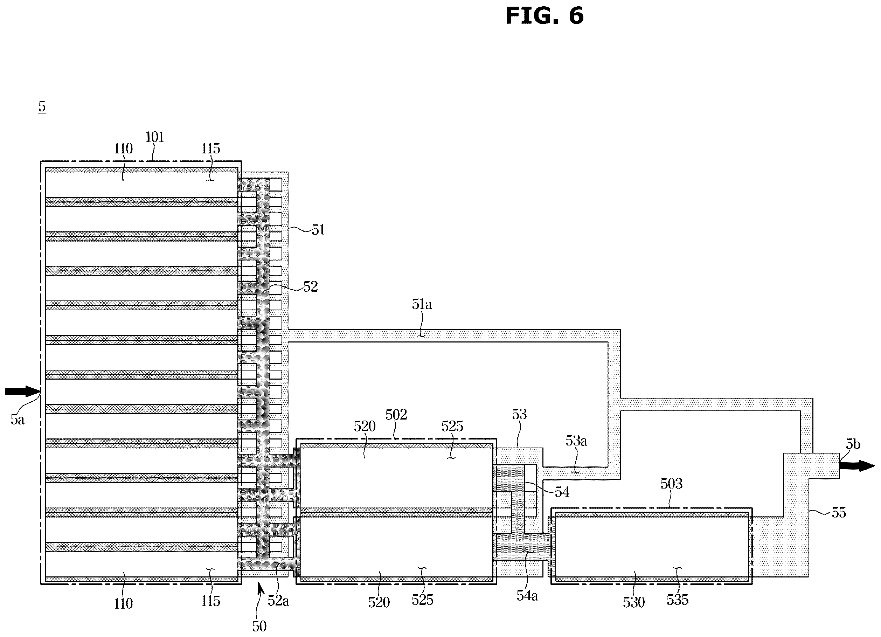

FIG. 6 illustrates a conceptual diagram of a water treatment apparatus according to an embodiment of the present disclosure.

With reference to FIG. 6, a water treatment apparatus 5 according to an embodiment of the present disclosure will be described. The same reference numerals are assigned to the same configurations as those of the water treatment apparatus 1 described above with reference to FIG. 1, and detailed description thereof may be omitted.

Referring to FIG. 6, the water treatment apparatus 5 according to an embodiment of the present disclosure may include a first ion removal apparatus 101. The first ion removal apparatus 101 may include the same configurations as those of the first ion removal apparatus 101 shown in FIG. 3. For example, the first ion removal apparatus 101 may include a plurality of first ion removal modules 110.

The water treatment apparatus 5 according to an embodiment of the present disclosure may include a second ion removal apparatus 502. The second ion removal apparatus 502 may be provided to remove ions from a portion of the fluid that has passed through the first ion removal apparatus 101. The second ion removal apparatus 502 may be provided to remove ions from a fluid, among fluids having passed through the first ion removal apparatus 101, which has a relatively high ion concentration. The second ion removal apparatus 502 may include a plurality of second ion removal modules 520. A second deionization channel 525 may be formed inside each of the plurality of second ion removal modules 520. Most configurations of the plurality of second ion removal modules 520 may be the same as those of the plurality of second ion removal modules 120 shown in FIG. 4.

Each of the plurality of second ion removal modules 520 of the second ion removal apparatus 502 according to an embodiment of the present disclosure may include the second deionization channel 525 that has a size larger than that of the first deionization channel 115 of each of the plurality of first ion removal modules 110 of the first ion removal apparatus 101. For example, the size of the second deionization channel 525 of each of the plurality of second ion removal modules 520 of the second ion removal apparatus 502 according to an embodiment of the present disclosure may be provided to be twice as large as the size of the first deionization channel 115 of each of the plurality of first ion removal modules 110 of the first ion removal apparatus 101.

Each of the plurality of second ion removal modules 520 of the second ion removal apparatus 502 according to one or more embodiments may include the second deionization channel 525 that has a width larger than that of the first deionization channel 115 of each of the plurality of first ion removal modules 110 of the first ion removal apparatus 101.

Each of the plurality of second ion removal modules 520 of the second ion removal apparatus 502 according to one or more embodiments may include the second deionization channel 525 that has a diameter larger than that of the first deionization channel 115 of each of the plurality of first ion removal modules 110 of the first ion removal apparatus 101.

As the second deionization channel 525 of each of the plurality of second ion removal modules 520 in the second ion removal apparatus 502 according to an embodiments is provided with a larger size, the number of the second ion removal modules may be reduced compared to the second ion removal apparatus 102 shown in FIG. 4.

The water treatment apparatus 5 according to an embodiment of the present disclosure may include a third ion removal apparatus 503. The third ion removal apparatus 503 may be provided to remove ions from a portion of the fluid that has passed through the second ion removal apparatus 502. The third ion removal apparatus 503 may be provided to remove ions from a fluid, among fluids that have passed through the second ion removal apparatus 502, which has a relatively high ion concentration. The third ion removal apparatus 503 may include a plurality of third ion removal modules 530. The at least one third ion removal module 530 may include the same configurations as those of the second ion removal module 520.

As for the water treatment apparatus 5 according to an embodiment of the present disclosure, the second ion removal apparatus 502 is configured to admit a fluid, in which ions have been removed to some extent by the first ion removal apparatus 101, and the second deionization channel 525 of each of the plurality of second ion removal modules 520 of the second ion removal apparatus 502 is provided with a larger size, and thus the number of the plurality of second ion removal modules 520 may be reduced.

As for the water treatment apparatus 5 according to an embodiment of the present disclosure, the third ion removal apparatus 503 is configured to admit a fluid, in which ions have been removed to some extent by the second ion removal apparatus 502, and the third deionization channel 535 of each of the plurality of third ion removal modules 530 of the third ion removal apparatus 503 is provided with a larger size, and thus the number of the plurality of third ion removal modules 530 may be reduced.

The water treatment apparatus 5 according to an embodiment of the present disclosure may include a fluid separation device 50. The fluid separation device 50 may separate fluids discharged from the plurality of first ion removal modules 110 of the first ion removal apparatus 101 and guide the separated fluids, and separate fluids discharged from the plurality of second ion removal modules 520 and guide the fluids.

In one or more embodiments, the fluid separation device 50 may include a first center guide 52 configured to guide a fluid, among fluids discharged from the plurality of first ion removal modules 110, which has a relatively high ion concentration to the plurality of second ion removal modules 520. For example, the first center guide 52 may be configured to collect fluids having a relatively high ion concentration among fluids discharged from the plurality of first ion removal modules 110 and then guide the collected fluid in a distributed manner to the plurality of second ion removal modules 520. A first center flow path 52a may be formed inside the first center guide 52.

In one or more embodiments, the fluid separation device 50 may include a first outer guide 51 configured to guide a fluid, among fluids discharged from the plurality of first ion removal modules 110, which has a relatively low ion concentration. For example, the first outer guide 51 may extend from the plurality of first ion removal modules 110 to the discharge guide 55. A first outer flow path 51a may be formed inside the first outer guide 51.

In one or more embodiments, the fluid separation device 50 may include a second center guide 54 configured to guide a fluid, among fluids discharged from the plurality of second ion removal modules 520, which has a relatively high ion concentration to at least one third ion removal module 530. For example, the second center guide 54 may be configured to collect fluids having a relatively high ion concentration among fluids discharged from the plurality of second ion removal modules 520 and then guide the collected fluid in a distributed manner to the at least one third ion removal module 530. A second center flow path 54a may be formed inside the second center guide 54.

In one or more embodiments, the fluid separation device 50 may include a second outer guide 53 configured to guide a fluid, among fluids discharged from the plurality of second ion removal modules 520, which has a relatively low ion concentration. For example, the second outer guide 53 may extend from the plurality of second ion removal modules 520 to the discharge guide 55. For example, the second outer guide 53 may extend to the discharge guide 55 together with the first outer guide 51. A second outer flow path 53a may be formed inside the second outer guide 53.

The water treatment apparatus 5 according to an embodiment of the present disclosure may include the discharge guide 55 for guiding the fluid discharged from the at least one third ion removal module 530.

The water treatment apparatus 5 according to an embodiment of the present disclosure may include an apparatus inlet 5a for introduction of a fluid, and an apparatus outlet 5b for discharge of fluid. A fluid flowing into the water treatment apparatus 5 through the apparatus inlet 5a may be guided to each of the plurality of first ion removal modules 110 of the first ion removal apparatus 101. A fluid passed through the first ion removal apparatus 101 and then guided by the first outer guide 51 may be guide through the discharge guide 55 and flow to the apparatus outlet 5b. Among fluids passed through the first ion removal apparatus 101, guided by the first center guide 52 and then passed through the second ion removal apparatus 502, a fluid guided by the second outer guide 53 may be guided through the discharge guide 55 and flow to the apparatus outlet 5b. Among fluids passed through the first ion removal apparatus 101, guided by the first center guide 52 and then passed through the second ion removal apparatus 102, a fluid guided by the second center guide 54 and then flowing into and through the third ion removal apparatus 503 may be guided through the discharge guide 55 and flow to the apparatus outlet 5b. Through the apparatus outlet 5b, the fluid in the discharge guide 55 may be discharged to the outside of the water treatment apparatus 5.

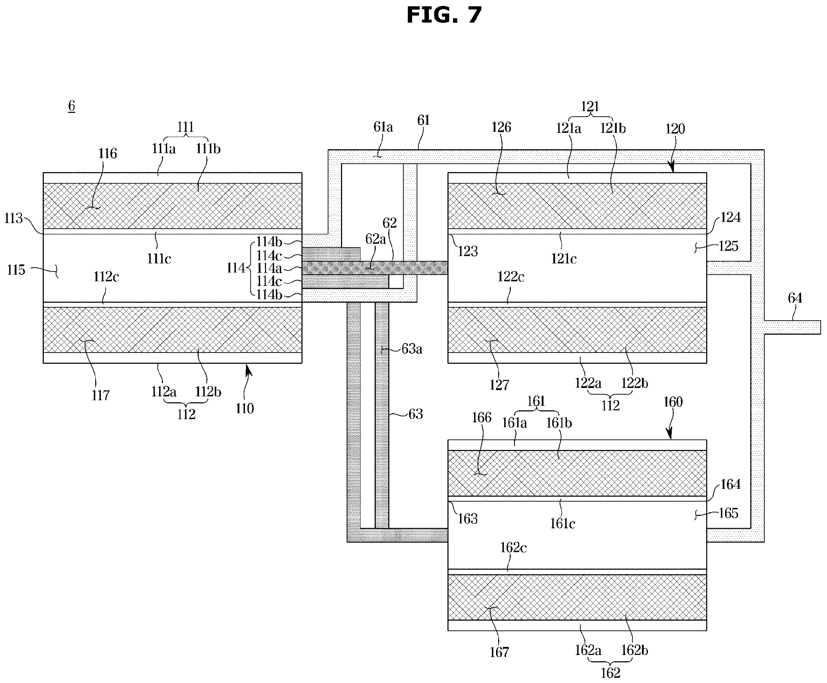

FIG. 7 illustrates a conceptual diagram of a water treatment apparatus according to an embodiment of the present disclosure.

With reference to FIG. 7, a water treatment apparatus 6 according to an embodiment of the present disclosure will be described. The same reference numerals are assigned to the same configurations as those of the water treatment apparatus 1 described above with reference to FIG. 1, and detailed description thereof may be omitted.

The water treatment apparatus 6 according to an embodiment of the present disclosure may include a first ion removal module 110 and a second ion removal module 120 having the same configurations as those of the first ion removal module 110 and the second ion removal module 120 of the water treatment apparatus 1 shown in FIG. 1.

The water treatment apparatus 6 according to an embodiment of the present disclosure may include a third ion removal module 160. For example, the third ion removal module 160 may operate by applying a voltage lower than that applied to the second ion removal module 120, and thus, power consumption of the water treatment apparatus 6 may be reduced.

The water treatment apparatus 6 according to an embodiment of the present disclosure may guide a fluid, which has an ion concentration lower than that of a fluid guided to the second ion removal module 120, to the third ion removal module 160. The third ion removal module 160 may be configured to remove ions from a fluid having an ion concentration that is lower than that of a fluid passing through the second ion removal module 120. As the third ion removal module 160 is configured to remove ions from a fluid having an ion concentration that is lower than the ion centration of a fluid passing through the second ion removal module 120, the third ion removal module 160 may operate by applying a voltage lower than that applied to the second ion removal module 120, and thus, power consumption of the water treatment apparatus 6 may be reduced.

The third ion removal module 160 may include a fifth electrode 161 and a sixth electrode 162. The fifth electrode 161 and the sixth electrode 162 may be arranged to face each other. The fifth electrode 161 and the sixth electrode 162 may form an electric field.

The fifth electrode 161 may include a fifth current collector 161a and a fifth porous electrode 161b. The fifth electrode 161 may serve as a positive electrode (an anode) or a negative electrode (a cathode).

In one embodiment, the fifth current collector 161a may include an electrode plate electrically connected to the fifth porous electrode 161b. The electrode plate may include a metal plate and/or a non-metallic plate.

The fifth current collector 161a may include a conductor. For example, the fifth current collector 161a may include graphite.

The fifth porous electrode 161b may include a solid electrode including a void space. The fifth porous electrode 161b may include a material that easily adsorbs ions. For example, the fifth porous electrode 161b may include a carbon porous electrode.

The sixth electrode 162 may include a sixth current collector 162a and a sixth porous electrode 162b. The sixth electrode 162 may serve as a positive electrode (an anode) or a negative electrode (a cathode).

In one embodiment, the sixth current collector 162a may include an electrode plate electrically connected to the sixth porous electrode 162b. The electrode plate may include a metal plate and/or a non-metallic plate.

The sixth current collector 162a may include a conductor. The sixth current collector 162a may include the same configuration as that of the fifth current collector 161a. For example, the sixth current collector 162a may include graphite.

The sixth porous electrode 162b may include a solid electrode including a void space. The sixth porous electrode 162b may include the same configuration as that of the fifth porous electrode 161b. The sixth porous electrode 162b may include a material that easily adsorbs ions. For example, the sixth porous electrode 162b may include a carbon porous electrode.

The third ion removal module 160 may include a third anion exchange membrane 161c. The third anion exchange membrane 161c may include a membrane that allows only anions among cations and anions to pass therethrough. The third anion exchange membrane 161c takes on a positive charge, thus allowing only anions to pass therethrough while repelling cations.

The third ion removal module 160 may include a third anion channel 166 formed by the fifth current collector 161a and the third anion exchange membrane 161c. The third anion channel 166 may include a space between the fifth current collector 161a and the third anion exchange membrane 161c. The fifth porous electrode 161b may be provided in the third anion channel 166.

The third ion removal module 160 may include a third cation exchange membrane 162c. The third cation exchange membrane 162c may include a membrane that allows only cations between cations and anions to pass therethrough. The third cation exchange membrane 162c takes on a negative charge, thus allowing only cations to pass therethrough while repelling anions.

The third ion removal module 160 may include a third cation channel 167 formed by the sixth current collector 162a and the third cation exchange membrane 162c. The third cation channel 167 may include a space between the sixth current collector 162a and the third cation exchange membrane 162c. The sixth porous electrode 162b may be provided in the third cation channel 167.

The third anion exchange membrane 161c and the third cation exchange membrane 162c may include a synthetic resin membrane.

The third ion removal module 160 may include a third deionization channel 165. The third deionization channel 165 may be formed by the third anion exchange membrane 161c and the third cation exchange membrane 162c. The third deionization channel 165 may include a space between the third anion exchange membrane 161c and the third cation exchange membrane 162c. The fifth electrode 161 may be arranged on one side of the third deionization channel 165, and the sixth electrode 162 may be arranged on the other side opposite to the one side of the third deionization channel 165.

Since the third anion channel 166, the third cation channel 167, and the third deionization channel 165 are divided from each other by the third anion and cation exchange membranes 161c and 162c, the channels may also be referred to as compartments, spaces, rooms, or chambers.

The third anion channel 166, the third cation channel 167, and the third deionization channel 165 may be fluidly connected to each other. For example, a fluid in the third deionization channel 165 may move to the third anion channel 166 and/or the third cation channel 167, and conversely, a fluid in the third anion channel 166 and/or a fluid in the third cation channel 167 may move to the third deionization channel 165.

When a positive voltage is applied to the fifth current collector 161a, the fifth electrode 161 becomes a positive electrode (an anode), and when a negative voltage is applied to the sixth current collector 162a, the sixth electrode 162 becomes a negative electrode (a cathode). Accordingly, when a positive voltage is applied to the fifth current collector 161a and a negative voltage is applied to the sixth current collector 162a, cations in the third deionization channel 165 may move to the third cation channel 167, and anions in the third deionization channel 165 may move to the third anion channel 166.

The anions moved to the third anion channel 166 based on a positive voltage being applied to the fifth current collector 161a may be adsorbed to the fifth porous electrode 161b, and the cations moved to the third cation channel 167 based on a negative voltage being applied to the sixth current collector 162a may be adsorbed to the sixth porous electrode 162b.

The applying of a positive voltage to the fifth current collector 161a and the applying of a negative voltage to the sixth current collector 162a may include allowing the potential of the fifth current collector 161a to be higher than the potential of the sixth current collector 162a.

When a negative voltage is applied to the fifth current collector 161a, the fifth electrode 161 becomes a negative electrode (a cathode), and when a positive voltage is applied to the sixth current collector 162a, the sixth electrode 162 becomes a positive electrode (an anode). Accordingly, with a negative voltage being applied to the fifth current collector 161a and a positive voltage being applied to the sixth current collector 162a, the cations in the third cation channel 167 may move to the third deionization channel 165, and the anions in the third anion channel 166 may move to the third deionization channel 165.

With a negative voltage being applied to the fifth current collector 161a, the anions adsorbed to the fifth porous electrode 161b may be desorbed from the fifth porous electrode 161b, and with a positive voltage being applied to the sixth current collector 162a, the cations adsorbed to the sixth porous electrode 162b may be desorbed from the sixth porous electrode 162b.

The applying of a negative voltage to the fifth current collector 161a and the applying of a positive voltage to the sixth current collector 162a may include allowing the potential of the fifth current collector 161a to be lower than the potential of the sixth current collector 162a.

In one embodiment, the third ion removal module 160 may include a third module inlet 163 for introduction of a fluid and a third module outlet 164 for discharge of a fluid. A fluid flowing into the third ion removal module 160 through the third module inlet 163 may pass through the third deionization channel 165. The fluid passed through the third deionization channel 165 may be discharged to the outside of the third ion removal module 160 through the third module outlet 164.

In one or more embodiments, the third ion removal module 160 may be a third ion removal cell 160 including a pair of electrodes 161 and 162 and a third deionization channel 165 to remove ions from a fluid. In one or more embodiments, the third ion removal module 160 may be a third ion removal stack 160 including a pair of electrodes 161 and 162 and a third deionization channel 165 to remove ions from a fluid.

The water treatment apparatus 6 according to an embodiment may include a fluid separation device 60. The fluid separation device 60 may guide the fluid discharged from the first ion removal module 110. The fluid separation device 60 may separate fluids passed through the first deionization channel 115 based on the ion concentration, and guide the separated fluids.

In one or more embodiments, the fluid separation device 60 may be a flow path separation device 60 configured to separate flow paths for guiding the fluids discharged from the first ion removal module 110. In one or more embodiments, the fluid separation device 10 may be a branch device 60 in which the fluids discharged from the first ion removal module 110 branches.

In one or more embodiments, the first module outlet 114 of the first ion removal module 110 may include: outer outlets 114b configured to discharge a fluid passed through an outer portion of the first deionization channel 115 that is adjacent to the first cation exchange membrane 112c and a fluid passed through an outer portion of the first deionization channel 115 that is adjacent to the first anion exchange membrane 111c, and a center outlet 114a configured to discharge a fluid passed through a central portion of the first deionization channel 115 that is farther away from the first cation exchange membrane 112c and the first anion exchange membrane 111c than the outer portions of the first deionization channel 115 through which the fluids discharged by the outer outlets 114b pass. The first module outlet 114 may further include additional outlets 114c between the outer outlets 114b and the center outlet 114a.

The outer outlets 114b may be provided outside of the additional outlets 114c. The additional outlets 114c may be provided outside of the center outlet 114a. The additional outlets 114c may be provided to be spaced apart from the first cation exchange membrane 112c and the first anion exchange membrane 111c. The center outlet 114a may be provided to be further spaced apart from the first cation exchange membrane 112c and the first anion exchange membrane 111c than the additional outlets 114c.

The fluid separation device 60 may include an outer guide 61. An outer flow path 61a may be formed inside the outer guide 61. The outer guide 61 may be connected to the first module outlet 114. The outer guide 61 may be connected to a portion of the first module outlet 114. The outer guide 61 may be connected to the outer outlet 114b.

The outer guide 61 may extend from the first module outlet 114. The outer guide 61 may extend from the first deionization channel 115. As an example, the outer guide 61 may extend from the first module outlet 114 to a discharge guide 13.

The outer guide 61 may be provided to guide a fluid passed through an area adjacent to the first anion exchange membrane 111c and a fluid passed through an area adjacent to the first cation exchange membrane 112c, among fluids discharged from the first deionization channel 115. The outer guide 61 may be provided to guide a fluid discharged through the outer outlet 114b of the first module outlet 114. The outer guide 11 may be provided to guide a fluid passed through an edge of the first deionization channel 115. The outer guide 61 may be provided to guide a fluid, among fluids passed through the first deionization channel 115, which has a relatively low ion concentration.

The outer guide 61 may be provided to guide a portion of the fluid discharged from the first deionization channel 115 to the outside of the second ion removal module 120 and the third ion removal module 130. The outer guide 61 may guide a portion of the fluid discharged from the first deionization channel 115 such that the portion is prevented from passing through the second ion removal module 120 and the third ion removal module 160. The outer guide 61 may guide a portion of the fluid discharged from the first deionization channel 115 such that the portion bypasses the second ion removal module 120 and the third ion removal module 130.

The fluid separation device 60 may include a center guide 62. A center flow path 62a may be formed inside the center guide 62. The center guide 62 may be connected to the first module outlet 114. The center guide 62 may be connected to a portion, which is not the portion connected to the outer guide 61, of the first module outlet 114. The center guide 62 may be connected to the center outlet 114a. The center guide 62 may be provided separately from the outer guide 61, or may be provided as one part with the outer guide 61.

The center guide 62 may connect the first ion removal module 110 to the second ion removal module 120. The center guide 62 may extend between the first deionization channel 115 and the second deionization channel 125. The center guide 62 may extend from the first module outlet 114 to the second module inlet 123. The center guide 62 may include a portion in which the width of the center flow path 62a increases in a direction from the first deionization channel 115 to the second deionization channel 125.

The center guide 62 may be separated from the outer guide 61. The center guide 62 may be divided from the outer guide 61. The outer guide 61 and the center guide 62 may be configured such that a fluid flowing in the outer flow path 61a and a fluid flowing in the center flow path 62a do not mix with each other. In one or more embodiments, the outer guide 61 and the center guide 62 may be configured to be divided from each other to prevent a fluid passing through the outer guide 61 and a fluid passing through the center guide 62 from mixing with each other.

The center guide 62 may be provided to guide a fluid, among the fluids discharged from the first deionization channel 115, which has passed through an area farther away from the first anion exchange membrane 111c and the first cation exchange membrane 112c than an area through which the fluid guided by the outer guide 11 passes. The center guide 62 may be provided to guide a fluid, among the fluids discharged from the first deionization channel 115, which is discharged through the center outlet 114a. The center guide 62 may guide a fluid, among the fluids discharged from the first deionization channel 115, which has a relatively high ion concentration.

The center guide 62 may guide a portion of the fluid discharged from the first deionization channel 115 to the second ion removal module 120. The center guide 62 may guide a portion of the fluid discharged from the first deionization channel 115 such that the portion passes through the second ion removal module 120.

The fluid separation device 60 may include additional guides 63. Additional flow paths 63a may be formed inside the additional guides 63. The additional guides 63 may be connected to the first module outlet 114. The additional guides 63 may be connected to a portion, which is not the portion connected to the outer guide 61 and the center guide 62, of the first module outlet 114. The additional guides 63 may be connected to the additional outlets 114c. The additional guides 63may be provided separately from the outer guide 61 and/or the center guide 62, or may be provided as one part with the outer guide 61 and/or the center guide 62.

The additional guide 63 may connect the first ion removal module 110 to the third ion removal module 160. The additional guide 63 may extend between the first deionization channel 115 and the third deionization channel 165. The additional guide 63 may extend from the first module outlet 114 to the third module inlet 163. The additional guide 63 may include a portion in which the width of the additional flow path 63a increases in a direction from the first deionization channel 115 to the third deionization channel 165.

The additional guide 63 may be separated from the outer guide 61 and/or the center guide 62. The additional guide 63 may be divided from the outer guide 61 and/or the center guide 62. The outer guide 61, the center guide 62, and the additional guide 63 may be configured such that the fluid flowing in the outer flow path 61a, the fluid flowing in the center flow path 62a, and the fluid flowing in the outer flow path 63a do not mix with each other. In one or more embodiments, the outer guide 61, the center guide 62, and the additional guide 63 may be configured to be divided from each other to prevent a fluid passing through the outer guide 61, a fluid passing through the center guide 62, and a fluid passing through the additional guide 63 from mixing with each other.

The additional guide 63 may be provided to guide, among the fluids discharged from the first deionization channel 115, a fluid passed through an area spaced apart from the first anion exchange membrane 111c and the first cation exchange membrane 112c, the area being spaced apart from the first anion exchange membrane 111c and the first cation exchange membrane 112c farther than the area through which the fluid guided by the outer guide 61 passes but less than the area through which the fluid guided by the center guide 62 passes. The additional guide 63 may be provided to guide a fluid discharged through the additional outlet 114c among fluids discharged from the first deionization channel 115. The additional guide 63 may guide a fluid having a relatively medium ion concentration among the fluids that have passed through the first deionization channel 115.

The center guide 62 may guide a portion of the fluid discharged from the first deionization channel 115 to the second ion removal module 120. The additional guide 63 may guide a portion of the fluid discharged from the first deionization channel 115 to flow into and through the third ion removal module 160.

In one or more embodiments, the outer guide 61, the center guide 62, and the additional guide 63 may be configured to separate the fluids discharged from the first deionization channel 115 based on the ion concentrations of the fluids passed through the first deionization channel 115.

The outer guide 61, the center guide 62, and the additional guide 63 may be provided to be symmetrical about the central axis along a direction in which a fluid of the first deionization channel 115 flows.

The water treatment apparatus 6 may include the discharge guide 64. The discharge guide 64 may guide fluids discharged from the second ion removal module 120 and the third ion removal module 130. The discharge guide 64 may guide fluids discharged from the second ion removal module 120 and the third ion removal module 130 to the outside of the water treatment apparatus 6. The outer guide 61 may be connected to the discharge guide 64.

The water treatment apparatus 6 according to an embodiment of the present disclosure may be implemented to, among fluids passed through the first ion removal module 110, guide a fluid with a relatively high ion concentration to additionally remove ions from the fluid by the second ion removal module 120,guide a fluid with a relatively medium ion concentration to additionally remove ions from the fluid by the third ion removal module 120, and allow a fluid with a relatively low ion concentration to be used without passing through the second ion removal module 120 and the third ion removal module 130, and thus the efficiency may be improved.

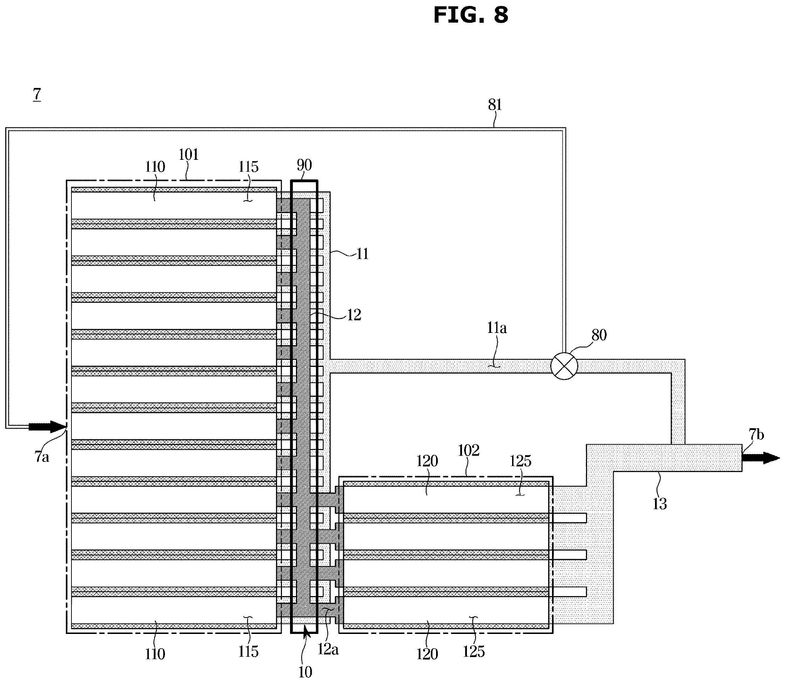

FIG. 8 illustrates a conceptual diagram of a water treatment apparatus according to an embodiment of the present disclosure.

With reference to FIG. 8, a water treatment apparatus 7 according to an embodiment of the present disclosure will be described. The same reference numerals are assigned to the same configurations as those of the water treatment apparatus 1 described above with reference to FIG. 1, and detailed description thereof may be omitted.

Referring to FIG. 8, the water treatment apparatus 7 according to an embodiment of the present disclosure may include a first ion removal apparatus 101.

The first ion removal apparatus 101 may include a plurality of first ion removal modules 110. The plurality of first ion removal modules 110 may include the same configurations as those of the first ion removal module 110 shown in FIG. 1.

The plurality of first ion removal modules 110 may be arranged along a direction perpendicular to a direction in which a fluid passes through the plurality of first ion removal modules 110. The plurality of first ion removal modules 110 may be stacked in a direction perpendicular to a direction in which a first deionization channel 115, which is formed inside each of the plurality of first ion removal modules 110, extends.

The water treatment apparatus 7 according to an embodiment of the present disclosure may include a second ion removal apparatus 102.

The second ion removal apparatus 102 may include at least one second ion removal module 120. The at least one second ion removal module 120 may include the same configurations as those of the second ion removal module 120 shown in FIG. 1.

For example, the second ion removal apparatus 102 may include a plurality of second ion removal modules 120. The plurality of second ion removal modules 120 may be arranged along a direction perpendicular to a direction in which a fluid passes through the plurality of second ion removal modules 120. The plurality of second ion removal modules 120 may be stacked in a direction perpendicular to a direction in which a second deionization channel 125, which is formed inside each of the plurality of second ion removal modules 120, extends.

The water treatment apparatus 7 according to an embodiment of the present disclosure may include a fluid separation device 10. The fluid separation device 10 may separate a fluid discharged from the plurality of first ion removal modules 110 of the first ion removal apparatus 101 and guide the separated fluid.

In one or more embodiments, the fluid separation device 10 may include a center guide 12 configured to guide a fluid , among fluids discharged from the plurality of first ion removal modules 110, which has a relatively high ion concentration to the at least one second ion removal module 120. For example, the center guide 12 may be configured to collect fluids having a relatively high ion concentrations among fluids discharged from the plurality of first ion removal modules 110, and then guide the collected fluid in a distributed manner to the at least one second ion removal module 120. A center flow path 12a may be formed inside the center guide 12.

In one or more embodiments, the fluid separation device 10 may include an outer guide 11 for guiding a fluid with a relatively low ion concentration among fluids discharged from the plurality of first ion removal modules 110. For example, the outer guide 11 may extend from the plurality of first ion removal modules 110 to the discharge guide 13. An outer flow path 11a may be formed inside the outer guide 11.

The water treatment apparatus 7 according to an embodiment of the present disclosure may include a discharge guide 13 for guiding the fluid discharged from the at least one second ion removal module 120.

The water treatment apparatus 7 according to an embodiment of the present disclosure may include an apparatus inlet 7a for introduction of a fluid, and an apparatus outlet 7b for discharge of fluid. A fluid flowing into the water treatment apparatus 7 through the apparatus inlet 7a may be guided to each of the plurality of first ion removal modules 110 of the first ion removal apparatus 101. A fluid passed through the first ion removal apparatus 101 and then guided by the outer guide 11, and a fluid passed through the first ion removal apparatus 101, guided by the center guide 12 and then passed through the second ion removal apparatus 102 may be guided through the discharge guide 13 and flow to the apparatus outlet 7b. Through the apparatus outlet 7b, the fluid in the discharge guide 13 may be discharged to the outside of the water treatment apparatus 7.

The water treatment apparatus 7 according to an embodiment of the present disclosure may include a sensor 90 for measuring the ion concentration of the fluid passing through the fluid separation device 10. The sensor 90 may be provided to measure the ion concentration of the fluid passing through at least one of the outer guide 11 or the center guide 12.

The water treatment apparatus 7 according to an embodiment of the present disclosure may include a switching valve 80 provided on the outer guide 11. The switching valve 80 may be provided to allow a portion of the fluid guided by the outer guide 11 and flowing to the discharge guide 13 to flow back to the first ion removal apparatus 101.

The water treatment apparatus 7 according to an embodiment of the present disclosure may include a return guide 81. The return guide 81 may extend from a portion of the outer guide 11 to the apparatus inlet 7a. The switching valve 80 may be located in a portion in which an outer flow path 11a inside the outer guide 11 branches off to the return guide 81.

For example, the water treatment apparatus 7 may be provided to adjust the switching valve 80 based on the ion concentration value of the fluid passing through the outer guide 11 that is measured by the sensor 90. When the ion concentration value of the fluid passing through the outer guide 11 that is measured by the sensor 90 is greater than a preset value, the water treatment apparatus 7 may adjust the switching valve 80 such that the fluid passing through the outer flow path 11a flows to the first ion removal apparatus 101 through the return guide 81. When the ion concentration value of the fluid passing through the outer guide 11 that is measured by the sensor 90 is less than the preset value, the water treatment apparatus 7 may adjust the switching valve 80 such that the fluid passing through the outer flow path 11a flows to the discharge guide 13.

For example, the water treatment apparatus 7 may be provided to adjust the voltage applied to the plurality of second ion removal modules 120 based on the ion concentration value of the fluid passing through the center guide 12 that is measured by the sensor 90.

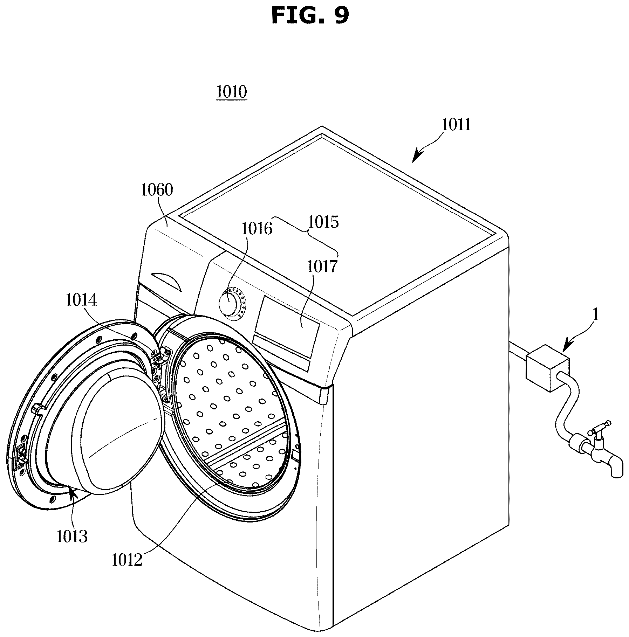

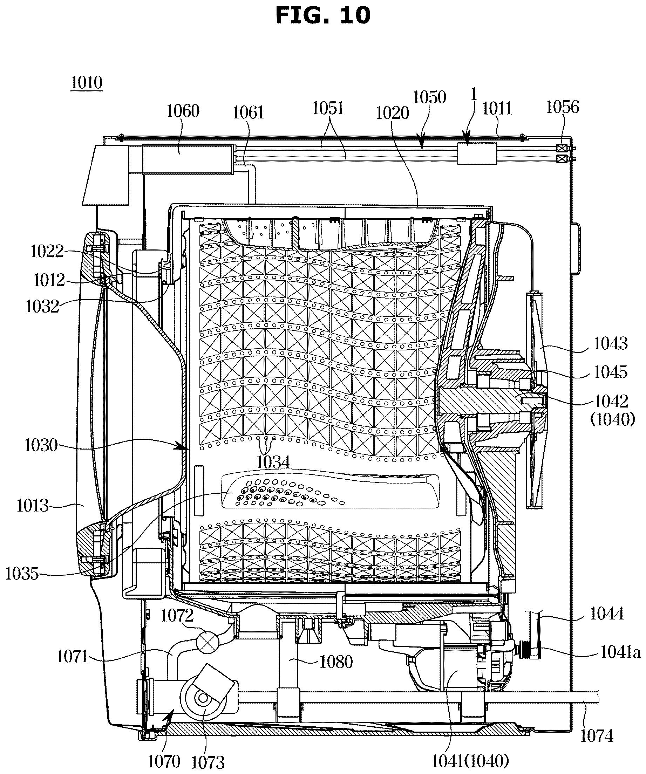

FIG. 9 illustrates a washing machine with a water treatment apparatus according to an embodiment of the present disclosure connected thereto. FIG. 10 illustrates a cross-section of a washing machine to which a water treatment apparatus according to an embodiment of the present disclosure is applied.

Referring to FIG. 9 and FIG. 10, a washing machine 1010 to which a water treatment apparatus according to an embodiment of the present disclosure is connected and/or applied will be described.

The washing machine 1010 may include a washing machine housing 1011 configured to accommodate one or more components therein. The washing machine housing 1011 may form an exterior appearance of the washing machine 1010. The washing machine housing 1011 may have a box shape with one open side.

The washing machine housing 1011 may include a housing opening 1012 formed to allow access to the inside of a drum 1030. The housing opening 1012 may be opened in an approximately forward direction.

The washing machine 1010 may include a door 1013 configured to open and close the housing opening 1012 formed in the washing machine housing 1011. The door 1013 may be rotatably mounted on the washing machine housing 1011 by a hinge 1014. At least a portion of the door 1013 may be transparent or semi-transparent so that the inside of the washing machine housing 1011 is visible.

The washing machine 1010 may include a tub 1020 provided in the washing machine housing 1011 to store water. The tub 1020 may be located in the washing machine housing 1011. The tub 1020 may have a tub opening 1022 provided to correspond to the housing opening 1012. The tub opening 1022 may be opened in an approximately forward direction. The tub 1020 may be supported in the washing machine housing 1011. The tub 1020 may have an approximately cylindrical shape with one open side.

The tub 1020 may be elastically supported in the washing machine housing 1011 by a damper 1080. The damper 1080 may connect the washing machine housing 1011 to the tub 1020. The damper 1080 may absorb vibration energy between the tub 1020 and the washing machine housing 1011 while vibration generated during rotation of the drum 1030 is transmitted to the tub 1020 and/or the washing machine housing 1011, thereby attenuating the vibration transmitted thereto.

The washing machine 1010 may include a drum 1030 provided to contain laundry. The drum 1030 may be provided to be rotatable inside the tub 1020. The drum 1030 may perform washing, rinsing, and/or spin-drying operations while rotating in the tub 1020. The drum 1030 may include through-holes 1034 connecting the interior space of the drum 1030 to the interior space of the tub 1020. The drum 1030 may have an approximately cylindrical shape with one open side. At least one lifter 1035 may be installed at an inner peripheral surface of the drum 1030 such that laundry is raised and dropped during rotation of the drum 1030.

The drum 1030 may have a drum opening 1032 provided to correspond to the housing opening 1012 and the tub opening 1022. The laundry may be introduced into or withdrawn from the drum 1030 through the housing opening 1012, the tub opening 1022, and the drum opening 1032.

The washing machine 1010 may include a washing machine drive device 1040 configured to rotate the drum 1030. The washing machine drive device 1040 may include a drive motor 1041, and a rotary shaft 1042 configured to transmit a driving force generated by the drive motor 1041 to the drum 1030. The rotary shaft 1042 may be connected to the drum 1030 by passing through the tub 1020.

The washing machines 1010 may be classified into a direct driving type in which the rotary shaft 1042 is directly connected to the drive motor 1041 to rotate the drum 1030 and an indirect driving type in which a pulley 1043 is connected between the drive motor 1041 and the rotary shaft 1042 to rotate the drum 1030.

The washing machine 1010 according to an embodiment may be provided as an indirect driving type washing machine, but is not limited thereto, and may also be provided as a direct driving type washing machine.

The rotary shaft 1042 may have one end connected to the drum 1030 and the other end connected to the pulley 1043 to receive a drive power from the drive motor 1041. A motor pulley 1041a may be provided at a rotation center of the drive motor 1041. A drive belt 1044 may be provided between the motor pulley 1041a and the pulley 1043 and the rotary shaft 1042 may be driven by the drive belt 1044.

A bearing housing 1045 configured to rotatably support the rotary shaft 1042 may be installed at a rear side of the tub 1020. The bearing housing 1045 may be formed of an aluminum alloy and may be inserted into the rear side of the tub 1020 during injection molding of the tub 1020.

The washing machine drive device 1040 may be provided to perform the washing, rinsing, and/or spin-drying, or drying operation by rotating the drum 1030 in the forward direction and the reverse direction.

The washing machine 1010 may include a water supply device 1050. The water supply device 1050 may supply water to the tub 1020. The water supply device 1050 may be disposed above the tub 1020. The water supply device 1050 may include a water supply pipe 1051 and a water supply valve 1056 provided at the water supply pipe 1051. The water supply pipe 1051 may be connected to an external water source. The water supply pipe 1051 may extend from the external water source to a detergent supply device 1060 and/or the tub 1020. Water may be supplied to the tub 1020 via the detergent supply device 1060. Water may be supplied to the tub 1020 without passing through the detergent supply device 1060.

The water supply valve 1056 may open or close the water supply pipe 1051 in response to an electrical signal of the controller. The water supply valve 1056 may allow or block the supply of water from the external water source to the tub 1020. The water supply valve 1056 may include, for example, a solenoid valve that is opened and closed in response to an electrical signal.

The washing machine 1010 may include the detergent supply device 1060 configured to supply a detergent to the tub 1020. The detergent supply device 1060 may be configured to supply a detergent into the tub 1020 during a water supply process. Water supplied through the water supply pipe 1051 may pass through the detergent supply device 1060 to be mixed with the detergent. Water containing the detergent may be supplied into the tub 1020. The detergent may include not only laundry detergents but also fabric softeners, deodorizers, disinfectants, or fragrances for a dryer. The detergent supply device 1060 may be connected to the tub 1020 via a connection pipe 1061.

The washing machine 1010 may include a drain device 1070. The drain device 1070 may be configured to discharge water contained in the tub 1020 to the outside. The drain device 1070 may include a drain pump 1073 configured to discharge water of the tub 1020 out of the washing machine housing 1011, a connection hose 1071 connecting the tub 1020 to the drain pump 1073 such that water contained in the tub 1020 is introduced into the drain pump 1073, and a drain hose 1074 to guide the water pumped by the drain pump 1073 out of the washing machine housing 1011. The drain device 1070 may include a drain valve 1072 provided at the connection hose 1071 to open and close the connection hose 1071.

The washing machine 1010 may provide a user interface device 1015 for interaction between a user and the washing machine 1010.

The washing machine 1010 may include at least one user interface device 1015. The user interface device 1015 may include at least one input interface 1016 and at least one output interface 1017.

The at least one input interface 1016 may convert sensory information received from the user into an electrical signal.

The at least one input interface 1016 may include a power button, an operation button, a course select dial (or a course select button), and a washing/rinsing/spin-drying setting button. The at least one input interface 1016 may include, for example, a tact switch, a push switch, a slide switch, a toggle switch, a micro switch, a touch switch, a touch pad, a touch screen, a jog dial, and/or a microphone.

The at least one output interface 1017 may transmit one or more data related the operation of the washing machine 1010 to the user by generating sensory information.

For example, the at least one output interface 1017 may transmit information related to the washing course, the operation time of the washing machine 1010, and information related to washing setting/rinsing setting/spin-drying setting to the user. Information related to the operation of the washing machine 1010 may be output through a screen, indicator, speech, or the like. The at least one output interface 1017 may include, for example, a liquid crystal display (LCD) panel, a light emitting diode (LED) panel, a speaker, and the like.

The water treatment apparatuse1, the water treatment apparatus 2, the water treatment apparatus 3, the water treatment apparatus 4, the water treatment apparatus 5, the water treatment apparatus 6, and the water treatment apparatus 7 according to one or more embodiments may be provided to remove ions from water supplied to the washing machine 1010. FIG. 9 and FIG. 10 illustrate examples in which the water treatment apparatus 1 shown in FIG. 1 is used for the washing machine 1010, but the water treatment apparatuses 2, the water treatment apparatus 3, the water treatment apparatus 4, the water treatment apparatus 5, the water treatment apparatus 6 and the water treatment apparatus 7 shown in FIG. 3, FIG. 4, FIG. 5, FIG. 6, FIG. 7, and FIG. 8 may also be used for the washing machine 1010.

For example, referring to FIG. 9, the water treatment apparatus 1 may be located outside the washing machine 1010. The water treatment apparatus 1 may be located at a position outside the washing machine 1010 and configured to remove ions from water supplied to the washing machine 1010 supplied to the washing machine 1010. The water treatment apparatus 1 may be provided at a flow path connecting an external water source and the washing machine 1010.

For example, referring to FIG. 10, the water treatment apparatus 1 may be located inside the washing machine 1010. The water treatment apparatus 1 may be connected to the water supply pipe 1051. The water treatment apparatus 1 may be configured to remove ions from water passing through the water supply pipe 1051. A position of the water treatment apparatus 1 is not limited to the water supply pipe 1051, and the water treatment apparatus 1 may be provided at one or more positions as long as it can admit water supplied to the washing machine 1010.

The water treatment apparatus 1 according to one or more embodiments may be located outside and/or inside the washing machine 1010.

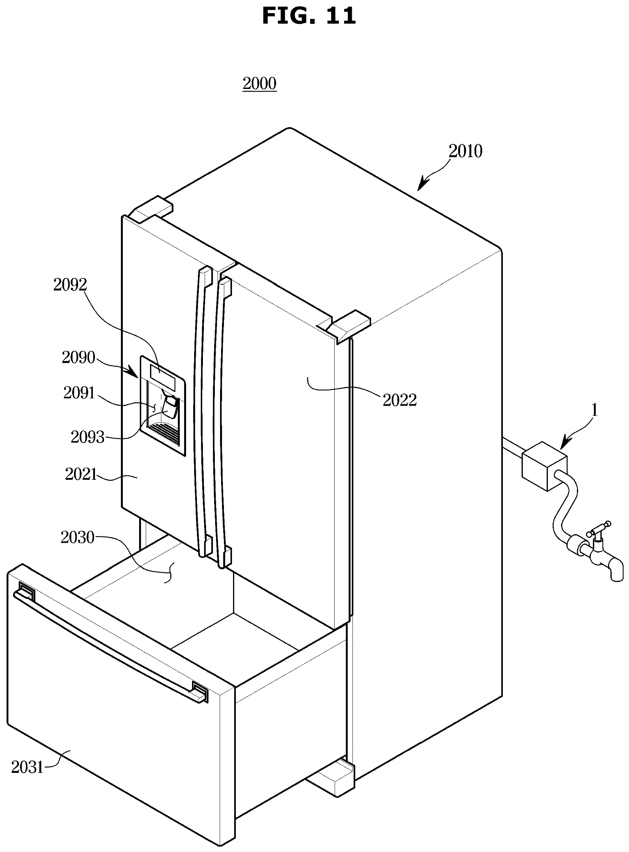

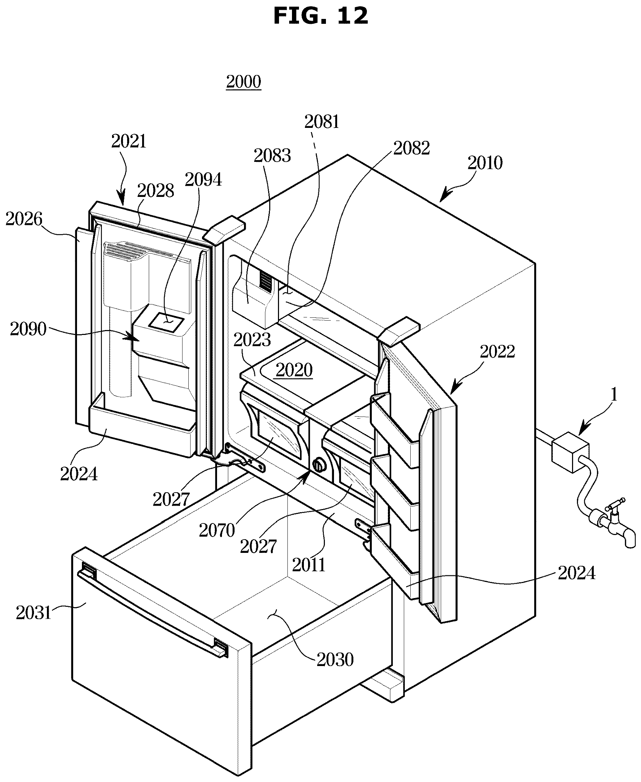

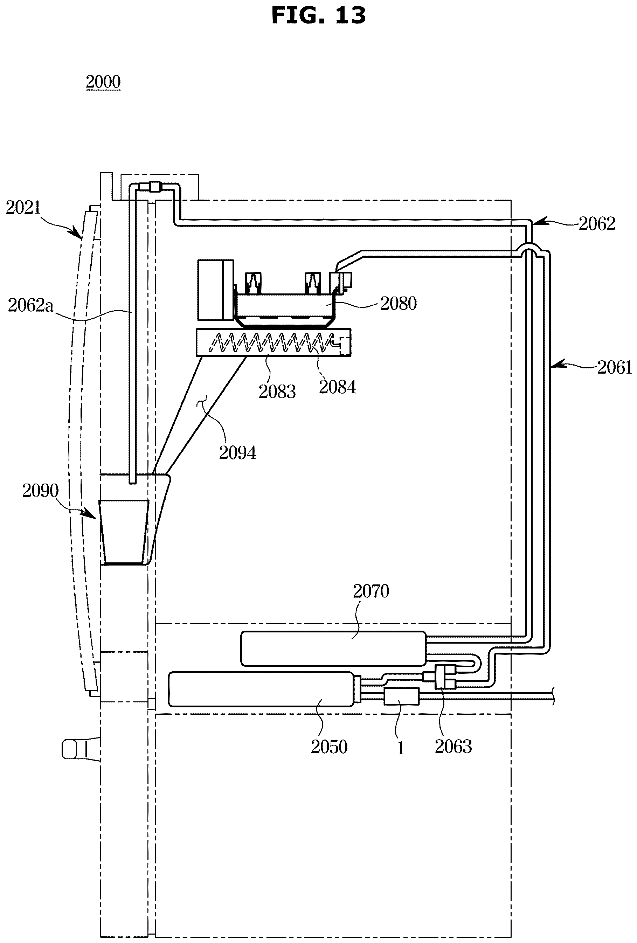

FIG. 11 illustrates a refrigerator with a water treatment apparatus according to an embodiment of the present disclosure connected thereto. FIG. 12 illustrates a refrigerator with a water treatment apparatus according to an embodiment of the present disclosure connected thereto, while doors of the refrigerator are opened. FIG. 13 illustrates a cross-section of a refrigerator to which a water treatment apparatus according to an embodiment of the present disclosure is applied.

A refrigerator 2000 to which the water treatment apparatus 1 according to an embodiment of the present disclosure is connected and/or applied will be described with reference to FIGS. 11 to 13.

The refrigerator 2000 according to an embodiment may include a main body 2010.

The main body 2010 may include an inner case, an outer case located outside the inner case, and an insulation provided between the inner case and the outer case.

The inner case may include at least one of a case, a plate, a panel, or a liner forming storage compartment 2020 and storage compartment 2030. The inner case may be formed as one body or as an assembly of a plurality of plates. The outer case may form an exterior appearance of a main body and may be coupled to outer sides of the inner case such that the insulation is positioned between the inner case and the outer case.

The insulation may insulate the inside of the storage compartments 2020 and 2030 from the outside of the storage compartment 2020 and the storage compartment 2030 to maintain the temperature inside the storage compartment 2020 and the storage compartment 2030 at a preset appropriate temperature without being influenced by an external environment of the storage compartment 2020 and the storage compartment 2030. According to an embodiment, the insulation may include a foam insulation. The foam insulation may be formed by injecting and foaming urethane foam including polyurethane and a blowing agent into space between the inner case and the outer case.

According to an embodiment, the insulation may further include a vacuum insulation in addition to a foaming insulation, or may be formed of only a vacuum insulation instead of a foaming insulation. The vacuum insulation may include a core material and a cladding material accommodating the core material and sealing the inside with vacuum or pressure close to vacuum. However, the insulation is not limited to the above-described foaming insulation or vacuum insulation, and may include one or more materials capable of being used for insulation.

The storage compartment 2020 and the storage compartment 2030 may include a space defined by the inner case. The storage compartment 2020 and the storage compartment 2030 may further include an inner case defining a space corresponding to the storage compartments 2020 and 2030. The storage compartment 2020 and the storage compartment 2030 may store one or more items such as food, medicine, and cosmetics and may be formed to have one open side for loading and unloading the items.

The refrigerator 2000 may include one or more of the storage compartment 2020 and the storage compartment 2030. When two or more of the storage compartment 2020 and the storage compartment 2030 are formed in the refrigerator 2000, the respective ones of the storage compartment 2020 and the storage compartment 2030 may have different uses and may be maintained at different temperatures. To this end, the storage compartment 2020 and the storage compartment 2030 may be partitioned by a partition wall 2011 including an insulation.

The storage compartment 2020 and the storage compartment 2030 may be provided at an appropriate temperature range according to the use thereof and may include a refrigerating compartment, a freezing compartment, or a temperature-conversion compartment classified according to the uses and/or temperature ranges. The refrigerating compartment may be maintained at a temperature appropriate for keeping items refrigerated, and the freezing compartment may be maintained at a temperature appropriate for keeping items frozen. Refrigeration may refer to keeping items cold without being frozen, and for example, the refrigerating compartment may be maintained in a temperature range of 0 degrees Celsius to 7 degrees Celsius. Freezing may refer to freezing items or keeping items frozen, and for example, the freezing compartment may be maintained in a temperature range of -20 degrees Celsius to -1 degrees Celsius. The temperature conversion compartment may be used as any one of the refrigerating compartment or the freezing compartment according to or regardless of a user's selection.

The storage compartment 2020 and the storage compartment 2030 may also be referred to as one or more names such as vegetable compartment, fresh compartment, cooling compartment, and ice-making compartment in addition to the refrigerating compartment, the freezing compartment, and the temperature-conversion compartment. The terms such as the refrigerating compartment, the freezing compartment, and the temperature-conversion compartment used below need to be understood as the storage compartment 2020 and the storage compartment 2030 having corresponding uses and corresponding temperature ranges.

The storage compartment 2020 and the storage compartment 2030 may include shelves 2023 to place food thereon and at least one storage box 2027 to store food in a sealed state.

According to an embodiment, the refrigerator 2000 may include one or more doors, such as door 2021, door 2022, and door 2031, configured to open and close one open side of the storage compartment 2020 and the storage compartment 2030. The door 2021, the door 2022, and the door 2031 may be provided to open and close the one or more storage of the compartment 2020 and the storage compartment 2030, respectively, or one of the door 2021, the door 2022, and the door 2031 may be provided to open and close the plurality of the storage compartment 2020 and the storage compartment 2030. The door 2021, the door 2022, and the door 2031 may be rotatably or slidably installed on the front of the main body 2010.

The door 2021, the door 2022, and the door 2031 may be configured to seal the storage compartment 2020 and the storage compartment 2030 when the door 2021, the door 2022, and the door 2031 are closed. The door 2021, the door 2022, and the door 2031 may include an insulation, similar to the main body 2010, to insulate the storage compartments 2020 and 2030 when the door 2021, the door 2022, and the door 2031 are closed.

According to an embodiment, the door 2021, the door 2022, and the door 2031 may include a door exterior plate forming the front of the door 2021, the door 2022, and the door 2031, a door interior plate forming the rear of the door 2021, the door 2022, and the door 2031 and facing the storage compartment 2020 and the storage compartment 2030, an upper cap, a lower cap, and a door insulation provided thereinside.

A gasket 2028 may be provided on the rim of the door interior plate to be in close contact with the front surface of the main body 2010, thereby sealing the storage compartment 2020 and the storage compartment 2030 when the door 2021, the door 2022, and the door 2031 are closed. The door inner plate may include a dyke 2025 protruding backward to mount a door basket 2024 for storing items.

According to an embodiment, when one storage compartment, such as the storage compartment 2020, is opened and closed by two doors, such as the door 2021 and the door 2022, the refrigerator 2000 may include a rotary bar 2026 to control cool air of the storage compartment 2020 by sealing a gap between the two doors, the door 2021 and the door 2022.

According to an embodiment, the door 2021, the door 2022, and the door 2031 may include a door body, and a front panel detachably coupled to the front side of the door body and forming the front of the door. The door body may include a door exterior plate forming the front of the door body, a door interior plate forming the rear of the door body and facing the storage compartment, an upper cap, a lower cap, and a door insulation provided thereinside.

The refrigerator 2000 may be classified into French door type, side-by-side type, bottom mounted freezer (BMF), top mounted freezer (TMF), or one door refrigerator according to arrangement of the door 2021, the door 2022, and the door 2031 and the storage compartment 2020 and the storage compartment 2030.

According to an embodiment, the refrigerator 2000 may include a cool air supply device configured to supply cool air to the storage compartment 2020 and the storage compartment 2030.

The cool air supply device may include a machine, an apparatus, an electronic device, and/or a combination system thereof, capable of generating and guiding cool air to cool the storage compartment 2020 and the storage compartment 2030.

According to an embodiment, the cool air supply device may generate cool air via a cooling cycle including compression, condensation, expansion, and evaporation processes of a refrigerant. To this end, the cool air supply device may include a cooling cycle device including a compressor, a condenser, an expander, and an evaporator capable of driving the cooling cycle. According to an embodiment, the cool air supply device may include a semiconductor, such as a thermoelectric element. The thermoelectric element may cool the storage compartment 2020 and the storage compartment 2030 by heating and cooling operations through the Peltier effect.

According to an embodiment, the refrigerator 2000 may include a machine room in which at least some components belonging to the cool air supply device are installed.

The machine room may be partitioned and insulated from the storage compartment 2020 and the storage compartment 2030 to prevent heat generated from the components installed in the machine room from being transferred to the storage compartment 2020 and the storage compartment 2030. To dissipate heat from the components installed in the machine room, the inside of the machine room may be configured to communicate with the outside of the main body 2010.

According to an embodiment, the refrigerator 2000 may include a dispenser 2090 provided at at least one door, such as the door 2021, to provide water and/or ice. The dispenser 2090 may be provided at the door 2021 to allow the user to approach thereto without opening the door 2021.

The dispenser 2090 may include a water-intake space 2091 in which a container is mounted to retrieve water or ice, and an operating lever configured to operate the dispenser 2090 to discharge water or ice.

According to an embodiment, the refrigerator 2000 may include an ice maker 2080 provided to generate ice. The ice maker 2080 may include an ice-making tray to store water, an ice-separating device configured to separate ice from the ice-making tray, and an ice bucket 2083 to store ice made in the ice-making tray.

The ice maker 2080 may be located in an ice making chamber 2081 located at an upper corner of the storage compartment 2020. The ice making chamber 2081 may be provided to be partitioned from the storage compartment 2020 by an ice making chamber wall 2082. The ice making chamber 2081 may be provided with an auger 2084 configured to transfer ice stored in the ice bucket 2083 to a chute 2094.

According to an embodiment, the refrigerator 2000 may include a water tank 2070 to store water. The water tank 2070 may be connected to an external water source. The water tank 2070 may store water purified by a water purifying filter 2050. A valve 2063 may be provided at a water supply line connecting the external water source to the water tank 2070.

According to an embodiment, the refrigerator 2000 may include a water supply flow path 2061 for ice making to supply water to the ice maker 2080, and a water supply flow path 2062 for the dispenser to supply water to the dispenser 2090.

According to an embodiment, the refrigerator 2000 may include a controller configured to control the refrigerator 2000.

The controller may process a user input of the user interface 2092 and control the operation of the user interface 2092. The user interface 2092 may be provided using an input interface and an output interface. The controller may receive a user input from the user interface 2092. In addition, the controller may transmit a display control signal to display an image on the user interface 2092 and image data to the user interface 2092 in response to the user input.

The input interface may include a key, a touch screen, a microphone, and the like. The input interface may receive the user input and transmit the user input to a processor.

The output interface may include a display, a speaker, and the like. The output interface may output one or more notification, message, information, and the like produced by the processor.

The water treatment apparatus 1, the water treatment apparatus 2, the water treatment apparatus 3, the water treatment apparatus 4, the water treatment apparatus 5, the water treatment apparatus 6, and the water treatment apparatus 7 according to one or more embodiments may be provided to remove ions from water supplied to the refrigerator 2000. FIG. 11, FIG. 12, and FIG. 13 illustrate examples in which the water treatment apparatus 1 shown in FIG. 1 is used for the refrigerator 2000, but the water treatment apparatus 2, the water treatment apparatus 3, the water treatment apparatus 4, the water treatment apparatus 5, the water treatment apparatus 6 and the water treatment apparatus 7 shown in FIG. 3, FIG. 4, FIG. 5, FIG. 6, FIG. 7, and FIG. 8 may also be used for the refrigerator 2000.

The water treatment apparatus 1 according to one or more embodiments may be located outside and/or inside the refrigerator 2000.

For example, referring to FIG. 11 and FIG. 12, the water treatment apparatus 1 may be located outside the refrigerator 2000. The water treatment apparatus 1 may be disposed outside the refrigerator 2000 and configured to remove ions from water supplied to the refrigerator 2000. The water treatment apparatus 1 may be provided at a flow path connecting the external water source to the refrigerator 2000.

For example, referring to FIG. 13, the water treatment apparatus 1 may be located inside the refrigerator 2000. The water treatment apparatus 1 may be connected to a water supply line. The water treatment apparatus 1 may be configured to remove ions from water passing through the water supply line. The position of the water treatment apparatus 1 is not limited to the water supply line, and the water treatment apparatus 1 may be located at one or more positions as long as it can admit water supplied to the refrigerator 2000.

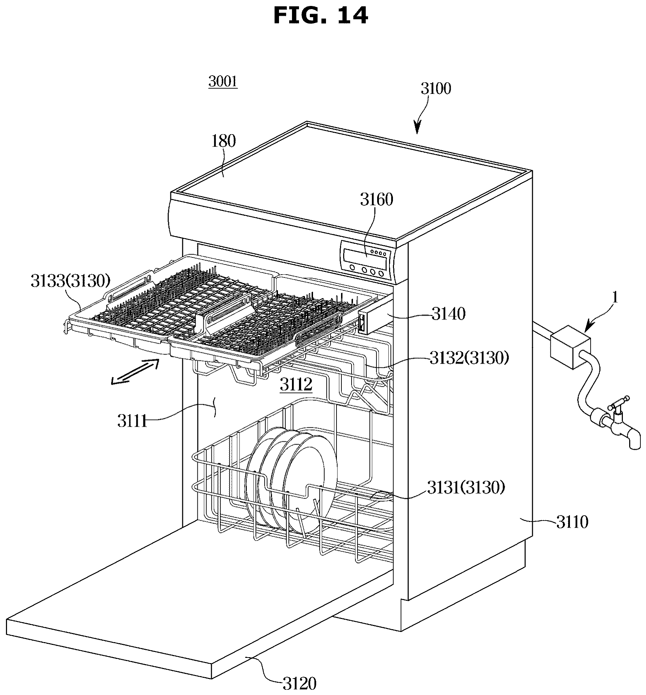

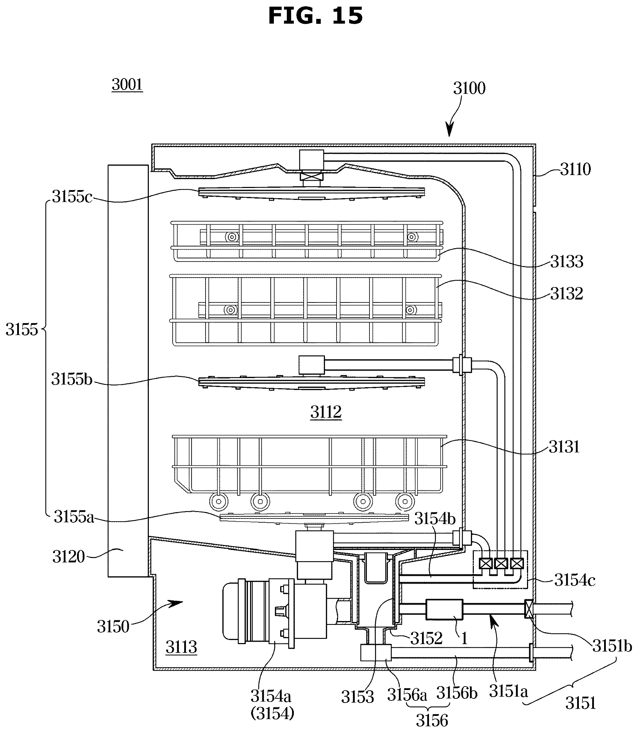

FIG. 14 illustrates a dishwasher with a water treatment apparatus according to an embodiment of the present disclosure connected thereto. FIG. 15 is a cross-section of a dishwasher to which the water treatment apparatus according to an embodiment of the present disclosure is applied.

A dishwasher 3100 to which the water treatment apparatus 1 according to an embodiment of the present disclosure is connected and/or applied will be described with reference to FIG. 14 and FIG. 15.

The dishwasher 3100 may include a main body 3110, a door 3120, a storage container 3130, a sliding member 3140, a washing assembly 3150, and a user interface 3160.

The main body 3110 may form an exterior appearance of the dishwasher 3100. The main body 3110 may have an opening 3111 at one side, and a washing tub 3112 opened and closed by the door 3120 and a machine room 3113 spatially separated from the washing tub 3112 may be located in the main body 3110.

The door 3120 may be provided to pivot with respect to the main body 3110 and open and close the opening 3111 of the main body 3110. The door 3120 may be hinged to a lower portion of the main body 3110. A handle or a groove for a handle may be formed at the outer side of the door 3120 such that the user may manually open the door 3120.

The storage container 3130 includes first basket 3131 and second basket 3132 and a cutlery 3133 located to be spaced apart from each other in the washing tub 3112 that are slidable forward and backward and have holes with one or more sizes to store dishes and the like.

The first basket 3131 accommodates one or more tableware to be washed such as dishes, plates, and cookware, the second basket 3132 accommodates cups, and the like, and the cutlery 3133 accommodates forks, table knives, spoons, chopsticks, knives, ladles, and like.

The sliding member 3140 may be provided in the washing tub 3112 to guide and allow slide movement of each of the first basket 3131 and the second basket 3132 and the cutlery 3133.

The washing assembly 3150 may be provided in the machine room 3113 and the washing tub 3112 and include a water supply portion 3151, a sump 3152, a heating portion 3153, a circulator portion 3154, a nozzle portion 3155, and a drain portion 3156 configured to perform a washing cycle, a rinsing cycle, a drying cycle, and the like.

The water supply portion 3151 includes a water supply pipe 3151a located between the external water source and the sump 3152 and guiding introduction of water from the outside to the sump 3152 and a water supply valve 3151b blocking water introduced from the outside.

The sump 3152 stores water introduced through the water supply pipe 3151a. The water dissolves a detergent to become wash water, and the wash water circulates the washing tub 3112, the sump 3152, the circulator portion 3154, and the nozzle portion 3155.

The heating portion 3153 is located at a surrounding of the sump 3152 and heats wash water contained in the sump 3152.

Also, the sump 3152 may further be provided with a temperature detector to detect temperature of water.

The circulator portion 3154 is provided between the sump 3152 and the nozzle portion 3155 and pumps wash water contained in the sump 3152 and supply the wash water to the nozzle portion 3155 via a circulation pipe 3154b.

The circulator portion 3154 includes a circulation pump 3154a configured to pump wash water contained in the sump 3152, a plurality of circulation pipes 3154b to guide the pumped wash water to the nozzle portion 3155, and a valve 3154c provided at each circulation pipe 3154b to control circulation of the pumped wash water.

The nozzle portion 3155 sprays the wash water supplied by the circulator portion 3154 to one or more tableware accommodated in the first basket 3131, the second basket 3132, and the cutlery 3133.

The nozzle portion 3155 includes a first nozzle 3155a located at a lower side of the first basket 3131, a second nozzle 3155b located between the first basket 3131 and the second basket 3132, and a third nozzle 3155c located at an upper side of the cutlery 3133. The first nozzle 3155a, the second nozzle 3155b, and the third nozzle 3155c may be rotated by a rotor.

The drain portion 3156 discharges wash water contained in the sump 3152 to the outside.

The drain portion 3156 includes a drain pump 3156a configured to pump wash water contained in the sump 3152 and a drain pipe 3156b to guide the pumped wash water to the outside. In addition, the drain portion 3156 may further include a drain valve to control discharging of the wash water contained in the sump 3152 to the outside.

The user interface 3160 may be provided on the main body 3110 and manipulate and display operation information of the dishwasher.

The user interface 3160 receives operation information such as one or more washing courses (e.g., standard course and manual course) and additional rinsing by an instruction of the user, displays information on the ongoing operation, and the like, and displays error information in the event of occurrence of an error.

The washing course includes a washing cycle to wash tableware by spraying the wash water to the tableware, a rinsing cycle to rinse the tableware by spraying ringing water to the tableware, and a drying cycle to dry the rinsed tableware.

The water treatment apparatus 1, the water treatment apparatus 2, the water treatment apparatus 3, the water treatment apparatus 4, the water treatment apparatus 5, the water treatment apparatus 6, and the water treatment apparatus 7 according to one or more embodiments may be configured to remove ions from water supplied to the dishwasher 3100. FIG. 14 and FIG. 15 illustrate examples in which the water treatment apparatus 1 shown in FIG. 1 is used for the dishwasher 3100, but the water treatment apparatus 2, the water treatment apparatus 3, the water treatment apparatus 4, the water treatment apparatus 5, the water treatment apparatus 6, and the water treatment apparatus 7 shown in FIG. 3, FIG. 4, FIG. 5, FIG. 6, FIG. 7, and FIG. 8 may also be used for the dishwasher 3100.

The water treatment apparatus 1 according to one or more embodiments may be located outside and/or inside the dishwasher 3100.

For example, referring to FIG. 14, the water treatment apparatus 1 may be located outside of the dishwasher 3100. The water treatment apparatus 1 may be located outside the dishwasher 3100 and configured to remove ions from water supplied to the dishwasher 3100. The water treatment apparatus 1 may be provided at a flow path connecting an external water source to the dishwasher 3100.

For example, referring to FIG. 15, the water treatment apparatus 1 may be located inside the dishwasher 3100. The water treatment apparatus 1 may be connected to the water supply pipe 3151a. The water treatment apparatus 1 may be configured to remove ions from water passing through the water supply pipe 3151a. The position of the water treatment apparatus 1 is not limited to a water supply pipe 3151a, and the water treatment apparatus 1 may be located at one or more positions as long as it can admit water supplied to the dishwasher 3100.

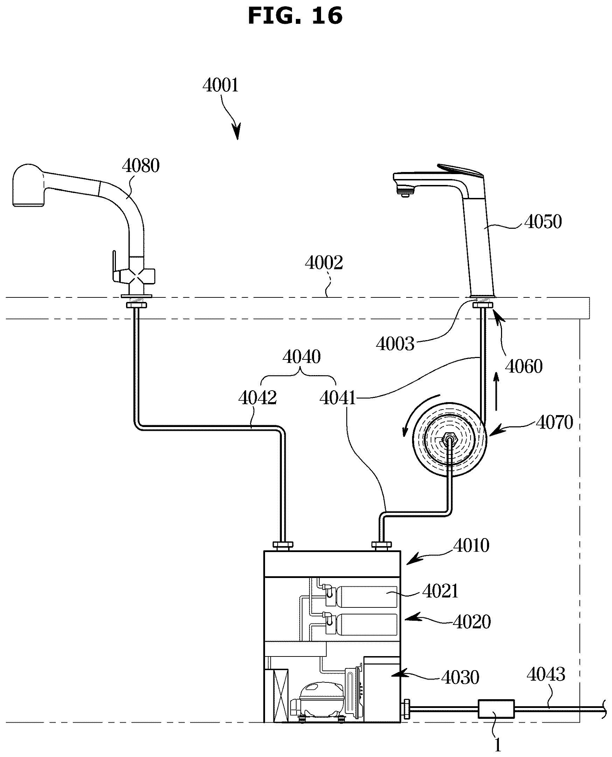

FIG. 16 illustrates a water purifier to which a water treatment apparatus according to an embodiment of the present disclosure is applied.

A water purifier 4000 according to an embodiment of the present disclosure will be described with reference to FIG. 16. The water purifier 4000 illustrated in FIG. 16 may include one of the water treatment apparatus 1, the water treatment apparatus 2, the water treatment apparatus 3, the water treatment apparatus 4, the water treatment apparatus 5, the water treatment apparatus 6, and the water treatment apparatus 7 shown in FIG. 1, FIG. 2, FIG. 3, FIG. 4, FIG. 5, FIG. 6, FIG. 7, and FIG. 8. For example, the water purifier 4000 may include the water treatment apparatus 1 shown in FIG. 1.

Referring to FIG. 16 the water purifier 4000 may include a filtering body 4010, and a dispenser 4050 connected to the filtering body 4010 and configured to discharge a liquid out of the filtering body 4010. The filtering body 4010 may be located on the lower side of a kitchen worktop 4002, and the dispenser 4050 may be located on the upper side of the kitchen worktop 4002. The kitchen worktop 4002 may include a sink. The sink may include a sink basin and a kitchen countertop.

The dispenser 4050 may be rotatably provided on the upper side of the kitchen worktop 4002. For example, the dispenser 4050 may be rotatably installed on the upper side of the sink. The dispenser 4050 may be connected to the filtering body 4010 via the connection pipe 4040.

The filtering body 4010 may be located inside the kitchen worktop 4002. The filtering body 4010 may include a filter unit 4020 including at least one filter 4021, and a heat exchanger unit 4030 provided to cool or heat a liquid purified by the filter unit 4020. The heat exchanger unit 4030 may include a cooler and a heater.

The filtering body 4010 may receive raw water such as tap water via an external pipe 4043.

A connection pipe 4040 of the filtering body 4010 may include a first pipe 4041 connecting the filtering body 4010 to the dispenser 4050 and a second pipe 4042 connecting the filtering body 4010 to a faucet 4080 installed at the kitchen worktop 4002.

The kitchen worktop 4002 may be provided with an installation member 4003 for installing the dispenser 4050. The installation member 4003 may be formed as an opening in at least one portion of the kitchen worktop 4002. The dispenser 4050 may be connected to the first pipe 4041 via the installation member 4003 of the kitchen worktop 4002.

The dispenser 4050 may be rotatably installed at the installation member 4003. The water purifier 4000 may include a rotating member 4060 to rotatably install the dispenser 4050 on the installation member 4003. The rotating member 4060 may be coupled to the kitchen worktop 4002.

The water purifier 4000 may include a pipe-fixing member 4070 provided to fix pipes, such as pipe 4041 and pipe 4042. The pipe-fixing member 4070 may be located inside the kitchen worktop 4002. The pipe-fixing member 4070 may be disposed between the filtering body 4010 and the dispenser 4050. The pipe-fixing member 4070 may be fixed to at least one of the filtering body 4010 or the kitchen worktop 4002. Parts of the pipe 4041 and the pipe 4042 may be wound around the pipe-fixing member 4070. As the parts of the pipe 4041 and the pipe 4042 are wound around or unwound from the pipe-fixing member 4070, lengths of the pipe 4041 and the pipe 4042 may be increased or decreased.

The water purifier 4000 according to an embodiment may include the water treatment apparatus 1. The water treatment apparatus 1 may be connected to an external pipe 4043. The water treatment apparatus 1 may be configured to remove ions from water passing through the external pipe 4043. The position of the water treatment apparatus 1 is not limited to the external pipe 4043, and the water treatment apparatus 1 may be located at various positions as long as it can admit water supplied to the water purifier 4001.

A water treatment apparatus 1 according to an embodiment includes: a first ion removal module 110 comprising a first cation exchange membrane 112c, a first anion exchange membrane 111c, and a first deionization channel 115 between the first cation exchange membrane and the first anion exchange membrane; a second ion removal module 220 comprising a second cation exchange membrane 122c, a second anion exchange membrane 121c, and a second deionization channel 125 between the second cation exchange membrane and the second anion exchange membrane; and a fluid separation device 10 configured to separate a fluid discharged from the first deionization channel, and guide the fluid that is separated. The fluid separation device 10 comprises: an outer guide 11 configured to guide a portion of the fluid discharged from the first deionization channel to an outside of the second deionization channel; and a center guide 12 inside of the outer guide and configured to guide another portion of the fluid discharged from the first deionization channel to the second deionization channel.

The outer guide and the center guide may be further configured to separate the fluid discharged from the first deionization channel 115 based on an ion concentration of the fluid passed through the first deionization channel 115.

The outer guide may be configured to guide the fluid passed through an area adjacent to the first cation exchange membrane and the fluid passed through an area adjacent to the first anion exchange membrane. The center guide may be further configured to guide the fluid passed through an area that is farther away from the first cation exchange membrane and the first anion exchange membrane than is an area through which the fluid guided by the outer guide passes.

The outer guide and the center guide may be divided from each other and are configured to prevent the fluid passing through the outer guide from mixing with the fluid passing through the center guide.

The water treatment apparatus may further include a discharge guide configured to guide the fluid discharged from the second ion removal module. The outer guide may be connected to the discharge guide.

The water treatment apparatus may further include a third ion removal module comprising a third cation exchange membrane, a third anion exchange membrane, and a third deionization channel between the third cation exchange membrane and the third anion exchange membrane. The fluid separation device may comprise: an additional guide 63 configured to guide a portion of the fluid from the first deionization channel and to the third ion removal module.

The additional guide 63 may be between the outer guide and the center guide.

The additional guide further may be configured to guide another fluid having an ion concentration higher than an ion concentration of the fluid guided by the outer guide and lower than an ion concentration of the fluid guided by the center guide.

The second ion removal module and the third ion removal module may be configured such that a voltage applied to the third ion removal module is lower than a voltage applied to the second ion removal module.

The second deionization channel comprises a width that is larger than a width of the first deionization channel.

A flow path inside of the center guide may have a width that is greater than or equal to a third and less than or equal to half of a width of the first deionization channel.

A water treatment apparatus 2 according to an embodiment includes a first ion removal apparatus including a plurality of first ion removal modules, a second ion removal apparatus including at least one second ion removal module, and a fluid separation device configured to guide a portion of fluids discharged from the first ion removal apparatus to the second ion removal apparatus while guiding another portion of the fluids discharged from the first ion removal apparatus to the outside of the second ion removal apparatus. The number of the at least one second ion removal module is smaller than the number of the plurality of first ion removal modules.

Each of the plurality of first ion removal modules may include a first deionization channel through which a fluid passes. The at least one second ion removal module may include a second deionization channel through which a fluid passes. The width of the second deionization channel may be greater than the width of the first deionization channel.

The fluid separation device may include a center guide that guides a portion of the fluids discharged from the first ion removal apparatus to the second ion removal apparatus, and an outer guide that guides another portion of the fluids discharged from the first ion removal apparatus to the outside of the second ion removal apparatus.

The water treatment apparatus may further include a third ion removal apparatus including at least one third ion removal module. The number of the at least one third ion removal module may be smaller than the number of the at least one second ion removal module.

The water treatment apparatus may further include a fourth ion removal apparatus including at least one fourth ion removal module. The outer guide may be provided to guide the other portion of the fluids discharged from the first ion removal apparatus to the fourth ion removal apparatus.

The water treatment apparatus may further include a fifth ion removal apparatus including at least one fifth ion removal module. The number of the at least one fifth ion removal module may be smaller than the number of the at least one fourth ion removal module.

The second ion removal apparatus and the fourth ion removal apparatus may be configured such that the voltage applied to the at least one fourth ion removal module is lower than the voltage applied to the at least one second ion removal module.

The water treatment apparatus may further include a sensor configured to measure the ion concentration of fluids passing through at least one of the outer guide or the center guide.

The water treatment apparatus may include an apparatus inlet for introduction of a fluid into the first ion removal apparatus, a return guide extending from a portion of the outer guide to the apparatus inlet, and a switching valve located in a portion at which the outer guide branches off to the return guide, the switching valve operable to allow the fluid passing through the outer guide to be guided to the return guide based on the ion concentration of the fluid passing through the outer guide that is measured by the sensor.

According to one aspect of the disclosure, the water treatment apparatus is implemented to allow the fluid separation device to guide a fluid with a low ion concentration among fluids passed through the first ion removal apparatus such that the fluid is prevented from passing through the second ion removal apparatus, and thus the efficiency of the water treatment apparatus can be improved.

According to one aspect of the disclosure, the water treatment apparatus is implemented to allow only a fluid with a high ion concentration among the fluids passed through the first ion removal apparatus to pass through the second ion removal apparatus, and thus the number of the second ion removal modules of the second ion removal apparatus may be reduced.

The effects of the present disclosure are not limited to the effects described above, and other effects that are not described will be clearly understood by those skilled in the art from the following description.

Specific embodiments illustrated in the drawings have been described above. However, the disclosure is not limited to the embodiments described above, and those of ordinary skill in the art to which the disclosure pertains may make various changes thereto without departing from the gist of the technical concept of the disclosure defined in the claims below.

## Claims

1. A water treatment apparatus comprising:
a first ion removal module comprising a first cation exchange membrane, a first anion exchange membrane, and a first deionization channel between the first cation exchange membrane and the first anion exchange membrane;
a second ion removal module comprising a second cation exchange membrane, a second anion exchange membrane, and a second deionization channel between the second cation exchange membrane and the second anion exchange membrane; and
a fluid separation device configured to separate a fluid discharged from the first deionization channel, and guide the fluid that is separated,
wherein the fluid separation device comprises:
an outer guide configured to guide a portion of the fluid discharged from the first deionization channel to an outside of the second deionization channel; and
a center guide inside of the outer guide and configured to guide another portion of the fluid discharged from the first deionization channel to the second deionization channel.

2. The water treatment apparatus of claim 1, wherein the outer guide and the center guide are further configured to separate the fluid discharged from the first deionization channel based on an ion concentration of the fluid passed through the first deionization channel.

3. The water treatment apparatus of claim 1, wherein the outer guide is configured to guide the fluid passed through an area adjacent to the first cation exchange membrane and the fluid passed through an area adjacent to the first anion exchange membrane, and
wherein the center guide is further configured to guide the fluid passed through an area that is farther away from the first cation exchange membrane and the first anion exchange membrane than is an area through which the fluid guided by the outer guide passes.

4. The water treatment apparatus of claim 1, wherein the outer guide and the center guide are divided from each other and are configured to prevent the fluid passing through the outer guide from mixing with the fluid passing through the center guide.

5. The water treatment apparatus of claim 1, further comprising a discharge guide configured to guide the fluid discharged from the second ion removal module,
wherein the outer guide is connected to the discharge guide.

6. The water treatment apparatus of claim 1, further comprising:
a third ion removal module comprising a third cation exchange membrane, a third anion exchange membrane, and a third deionization channel between the third cation exchange membrane and the third anion exchange membrane,
wherein the fluid separation device comprises:
an additional guide configured to guide a portion of the fluid from the first deionization channel and to the third ion removal module.

7. The water treatment apparatus of claim 6, wherein the additional guide is between the outer guide and the center guide.

8. The water treatment apparatus of claim 6, wherein the additional guide further is configured to guide another fluid having an ion concentration that is higher than an ion concentration of the fluid guided by the outer guide and lower than an ion concentration of the fluid guided by the center guide.

9. The water treatment apparatus of claim 6, wherein the second ion removal module and the third ion removal module are configured such that a voltage applied to the third ion removal module is lower than a voltage applied to the second ion removal module.

10. The water treatment apparatus of claim 1, wherein the second deionization channel comprises a width that is larger than a width of the first deionization channel.

11. The water treatment apparatus of claim 1, wherein a flow path inside of the center guide has a width that is greater than or equal to a third and less than or equal to half of a width of a flow path of the first deionization channel.
